(19) Europäisches Patentamt
European Patent Office
Office européen des brevets

(11) EP 1 980 150 A1

(12) EUROPEAN PATENT APPLICATION

(43) Date of publication:
15.10.2008 Bulletin 2008/42

(51) Int Cl.:
*A01N 43/90* (2006.01) *A01P 3/00* (2006.01)

(21) Application number: 08152841.6

(22) Date of filing: 17.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 13.04.2007 EP 07106148

(71) Applicant: BASF SE
67056 Ludwigshafen (DE)

(72) Inventors:
- Vrettou, Marianna
  68165 Mannheim (DE)
- Müller, Bernd
  67227 Frankenthal (DE)
- Ulmschneider, Sarah
  67098 Bad Dürkheim (DE)
- Renner, Jens
  67098 Bad Dürkheim (DE)
- Haden, Egon
  67259 Kleinniedesheim (DE)

# (54) Fungicidal mixtures based on triazolopyrimidine compounds

(57) Fungicidal mixtures comprising, as active components,
1) at least one triazolopyrimidine of formula I,

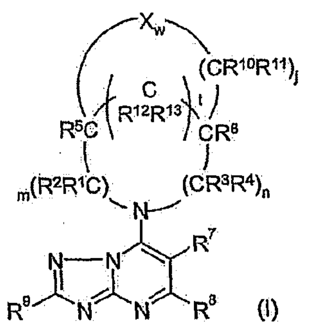

(I)

wherein the variables are as defined in the specification and
2) at least one active compound II selected from the following groups:
in a synergistically effective amount, method for controlling harmful fungi using mixtures of at least a compound I with at least an active compounds II and to to compositions comprising these mixtures.

EP 1 980 150 A1

## Description

The present invention relates to fungicidal mixtures comprising, as active components,

1) at least one triazolopyrimidine of formula I,

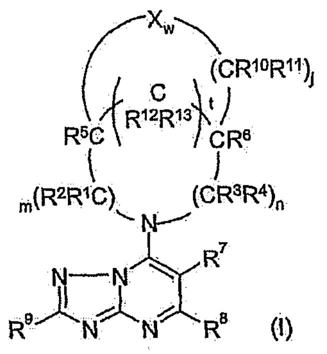

(I)

wherein the variables have the following meanings

| | |
|---|---|
| $R^1$, $R^2$, $R^3$, $R^4$, $R^{10}$, $R^{11}$, $R^{12}$ and $R^{13}$ | each independently of each other are hydrogen, halogen or $C_1$-$C_6$ alkyl; or $R^{12}$ and $R^{13}$ are part of an endocyclic double bond if t is 2,3 or 4; |
| $R^5$, $R^6$ | each independently of each other, are hydrogen, halogen, or $C_1$-$C_6$ alkyl; |
| $R^7$ | is phenyl or a heteroaromatic group selected from pyridin, pyrimidine and thiophen which aromatic rings are substituted by 1 to 5 groups each independently of each other selected from halogen, $C_1$-$C_3$-alkyl, $C_1$-$C_3$-halogenalkyl, and $C_1$-$C_3$-alkoxy; |
| $R^8$ | is $C_1$-$C_6$ alkyl or halogen; |
| $R^9$ | is hydrogen, mercapto or $C_1$-$C_3$ alkylthio; |
| X | is oxygen, sulfur or N-$C_1$-$C_3$-alkyl; |
| (m+n) | is 0, 1, 2, or 3; |
| (w+j) | is 1,2,3 or 4; and |
| t | is 0,1, 2, 3 or 4; |

and
2) at least one active compound II selected from the following groups:

A) azoles selected from the group consisting of bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole, prochloraz, pefurazoate, imazalil, triflumizole, cyazofamid, benomyl, carbendazim, thiabendazole, fuberidazole, ethaboxam, etridiazole and hymexazole;

B) strobilurins selected from the group consisting of azoxystrobin, dimoxystrobin, enestroburin, fluoxastrobin, kresoxim-methyl, methominostrobin, orysastrobin, picoxystrobin, pyraclostrobin, trifloxystrobin, enestroburin, methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate and methyl 2-(ortho-(2,5-dimethylphenyloxymethylene)phenyl)-3-methoxyacrylate;

C) carboxamides selected from the group consisting of carboxin, benalaxyl, benodanil, boscalid, fenfuram, fenhexamid, flutolanil, furametpyr, mepronil, metalaxyl, mefenoxam, ofurace, oxadixyl, oxycarboxin, penthiopyrad, thifluzamide, tiadinil, 3,4-dichloro-N-(2-cyanophenyl)isothiazole-5-carboxamide, dimethomorph, flumorph, flumetover, fluopicolide (picobenzamid), zoxamide, carpropamid, diclocymet, mandipropamid, N-(2-(4-[3-(4-chlorophenyl)prop-2-ynyloxy]-3-methoxyphenyl)ethyl)-2-methanesulfonylamino-3-methylbutyramide, N-(2-(4-[3-(4-chlorophenyl)prop-2-ynyloxy]-3-methoxyphenyl)ethyl)-2-ethanesulfonylamino-3-methylbutyramide, methyl 3-(4-chlorophenyl)-3-(2-isopropoxycarbonylamino-3-methylbutyrylamino)propionate, N-(2-{4-[3-(4-Chloro-phenyl)-prop-2-ynyloxy]-3-methoxy-phenyl}-ethyl)-2-methanesulfonylamino-3-methyl-butyramide, N-(2-{4-[3-(4-Chloro-phenyl)-prop-2-ynyloxy]-3-methoxy-phenyl}-ethyl)-2-ethanesulfonylamino-3-methylbutyramide, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide, N-(2-cyanophenyl)-3,4-dichloroisothiazole-5-carboxamide and N-(2-bicyclo-propyl-2-ylphenyl)-3-difluoromethyl-1-methyl-1 H-pyrazole-4-carboxamide;

D) heterocyclic compounds selected from the group consisting of fluazinam, pyrifenox, bupirimate, cyprodinil, fenarimol, ferimzone, mepanipyrim, nuarimol, pyrimethanil, triforine, fenpiclonil, fludioxonil, aldimorph, dodemorph, fenpropimorph, tridemorph, fenpropidin, iprodione, procymidone, vinclozolin, famoxadone, fenamidone, octhilinone, probenazole, 5-chloro-7-(4-methylpiperidin-1-yl)-6-(2,4,6-trifluorophenyl)-[1,2,4]triazolo[1,5-a]pyrimidine, anilazine, diclomezine, pyroquilon, proquinazid, tricyclazole, 2-butoxy-6-iodo-3-propylchromen-4-one, acibenzolar-S-methyl, captafol, captan, dazomet, folpet, fenoxanil, quinoxyfen and N,N-dimethyl-3-(3-bromo-6-fluoro-2-methylindole-1-sulfonyl)-[1,2,4]triazole-1-sulfonamide,

E) carbamates selected from the group consisting of mancozeb, maneb, metam, metiram, ferbam, propineb, thiram, zineb, ziram, diethofencarb, iprovalicarb, flubenthiavalicarb, propamocarb, 4-fluorophenyl N-(1-(1-(4-cyanophenyl)ethanesulfonyl)but-2-yl)carbamate, methyl 3-(4-chlorophenyl)-3-(2-isopropoxycarbonylamino-3-methylbutyrylamino)propanoate, and N-{2-Chloro-5-[1-(3-methyl-benzyloxyimino)-ethyl]-benzyl}-acetamidecarbamate, N-{2-Chloro-5-[1-(6-methyl-pyridin-2-ylmethoxyimino)-ethyl]-benzyl}-acetamide,

F) other fungicides selected from the group consisting of guanidine, dodine, iminoctadine, guazatine, antibiotics: kasugamycin, streptomycin, polyoxin, validamycin A, nitrophenyl derivatives: binapacryl, dinocap, dinobuton, sulfur-containing heterocyclyl compounds: dithianon, isoprothiolane, organometallic compounds: fentin salts, organophosphorus compounds: edifenphos, iprobenfos, fosetyl, fosetyl-aluminum, phosphorous acid and its salts, pyrazophos, tolclofos-methyl, organochlorine compounds: chlorothalonil, dichlofluanid, flusulfamide, hexachlorobenzene, phthalide, pencycuron, quintozene, thiophanate-methyl, tolylfluanid, inorganic active compounds: Bordeaux mixture, copper acetate, copper hydroxide, copper oxychloride, basic copper sulfate, sulfur, others: cyflufenamid, cymoxanil, dimethirimol, ethirimol, furalaxyl, metrafenone and spiroxamine;

in a synergistically effective amount.

Moreover, the invention relates to a method for controlling harmful fungi using mixtures of at least a compound I with at least an active compounds II and to the use of the compounds I with active compounds II for preparing such mixtures, and also to compositions comprising these mixtures.

The triazolopyrimidines of formula I referred to above as component 1, their preparation and their action against harmful fungi are known from the literature (WO 2006/100037 and WO 2006/100038).

The active compounds II mentioned above by common names as component 2, their preparation and their action against harmful fungi are generally known (cf.: http://www.hclrss.demon.co.uk/index.html); they are commercially available.

The compounds II named according to IUPAC, their preparation and their fungicidal action are likewise known:

methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate (EP-A 12 01 648);

methyl 2-(ortho-((2,5-dimethylphenyloxymethylene)phenyl)-3-methoxyacrylate (EP-A 226 917);

5-chloro-7-(4-methylpiperidin-1-yl)-6-(2,4,6-trifluorophenyl)-[1,2,4]triazolo[1,5-a]pyrimidine (WO 98/46608),

3,4-dichloro-N-(2-cyanophenyl)isothiazole-5-carboxamide (WO 99/24413),

N-(2-{4-[3-(4-chlorophenyl)prop-2-ynyloxy]-3-methoxyphenyl}ethyl)-2-methanesulfonyl-amino-3-methylbutyramide, N-(2-{4-[3-(4-chlorophenyl)prop-2-ynyloxy]-3-methoxyphenyl}ethyl)-2-ethanesulfonylamino-3-methylbutyramide (WO 04/049804),

N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide (WO 03/066609), N-(3',4'-dichloro-5-fluorobiphenyl-2-yl)-3-difluoromethyl-1-methylpyrazole-4-carboxamide (WO 03/053145);

2-butoxy-6-iodo-3-propylchromen-4-one (WO 03/14103),

3-[5-(4-chlorophenyl)-2,3-dimethylisoxazolidin-3-yl]pyridine (EP-A 10 35 122);

amisulbrom, N,N-dimethyl-3-(3-bromo-6-fluoro-2-methylindole-1-sulfonyl)-[1,2,4]triazole-1-sulfonamide (WO 03/053145),

methyl 3-(4-chlorophenyl)-3-(2-isopropoxycarbonylamino-3-methylbutyrylamino)-propanoate (EP-A 1028125).

It is an object of the present invention, with a view to reducing the application rates and broadening the activity spectrum of the known compounds, to provide mixtures which, at a reduced total amount of active compounds applied, have improved activity against harmful fungi, in particular for certain indications.

We have found that this object is achieved by the mixtures defined at the outset. Moreover, we have found that simultaneous, that is joint or separate, application of the compounds I and an active compound II or successive application of the compounds I and an active compound II allows better control of harmful fungi than is possible with the individual compounds (synergistic mixtures). The compounds I can be used as a synergist for a large number of different active compounds. The simultaneous, that is joint or separate, application of the compound I with an active compound II increases the fungicidal activity in a superadditive manner.

The mixtures of the compounds I and an active compound II or the simultaneous, that is joint or separate, use of the compounds I and an active compound II are/is distinguished by excellent activity against a broad spectrum of phytopathogenic fungi, in particular from the classes of the Ascomycetes, Deuteromycetes, Oomycetes and Basidiomycetes. Some of them are systemically active and can be used in crop protection as foliar fungicides, as fungicides for seed dressing and as soil fungicides.

They are particularly important in the control of a multitude of fungi on various crop plants, such as bananas, cotton, vegetables (for example cucumbers, beans and cucurbits), barley, grass, oats, coffee, potatoes, corn, fruit, rice, rye, soybeans, tomatoes, grape vines, wheat, ornamental plants, sugar cane and a multiplicity of seeds.

Advantageously, they are suitable for controlling the following plant diseases:

- Alternaria species on vegetables, oilseed rape, sugar beet and fruit and rice, such as, for example, A. solani or A. alternata on potatoes and tomatoes;
- Aphanomyces species on sugar beet and vegetables;
- Ascochyta species on cereals and vegetables;
- Bipolaris and Drechslera species on corn, cereals, rice and lawns, such as, for example, D. maydis on corn;
- Blumeria graminis (powdery mildew) on cereals;
- Botrytis cinerea (gray mold) on strawberries, vegetables, flowers and grapevines;
- Bremia lactucae on lettuce;
- Cercospora species on corn, soybeans, rice and sugar beet;
- Cochliobolus species on corn, cereals, rice, such as, for example, Cochliobolus sativus on cereals, Cochliobolus miyabeanus on rice;
- Colletotricum species on soybeans and cotton;
- Drechslera species, Pyrenophora species on corn, cereals, rice and lawns, such as, for example, D. teres on barley or D. tritici-repentis on wheat;
- Esca on grapevines, caused by Phaeoacremonium chlamydosporium, Ph. Aleophilum and Formitipora punctata (syn. Phellinus punctatus);
- Exserohilum species on corn;
- Erysiphe cichoracearum and Sphaerotheca fuliginea on cucumbers;
- Fusarium and Verticillium species on various plants, such as, for example, F. graminearum or F. culmorum on cereals or F. oxysporum on a multitude of plants, such as, for example, tomatoes;
- Gaeumanomyces graminis on cereals;
- Gibberella species on cereals and rice (for example Gibberella fujikuroi on rice);
- Grainstaining complex on rice;
- Helminthosporium species on corn and rice;
- Michrodochium nivale on cereals;
- Mycosphaerella species on cereals, bananas and groundnuts, such as, for example, M. graminicola on wheat or M.fijiensis on bananas;
- Peronospora species on cabbage and bulbous plants, such as, for example, P. brassicae on cabbage or P. destructor on onions;
- Phakopsara pachyrhizi and Phakopsara meibomiae on soybeans;

- Phomopsis species on soybeans and sunflowers;
- Phytophthora infestans on potatoes and tomatoes;
- Phytophthora species on various plants, such as, for example, P. capsici on bell pepper;
- Plasmopara viticola on grapevines;
- Podosphaera leucotricha on apples;
- Pseudocercosporella herpotrichoides on cereals;
- Pseudoperonospora on various plants, such as, for example, P. cubensis on cucumber or P. humili on hops;
- Puccinia species on various plants, such as, for example, P. triticina, P. striformins, P. hordei or P.graminis on cereals or P. asparagi on asparagus;
- Pyricularia oryzae, Corticium sasakii, Sarocladium oryzae, S.attenuatum, Entyloma oryzae on rice;
- Pyricularia grisea on lawns and cereals;
- Pythium spp. on lawns, rice, corn, cotton, oilseed rape, sunflowers, sugar beet, vegetables and other plants, such as, for example, P. ultiumum on various plants, P. aphanidermatum on lawns;
- Rhizoctonia species on cotton, rice, potatoes, lawns, corn, oilseed rape, potatoes, sugar beet, vegetables and on various plants, such as, for example, R. solani on beet and various plants;
- Rhynchosporium secalis on barley, rye and triticale;
- Sclerotinia species on oilseed rape and sunflowers;
- Septoria tritici and Stagonospora nodorum on wheat;
- Erysiphe (syn. Uncinula) necator on grapevines;
- Setospaeria species on corn and lawns;
- Sphacelotheca reilinia on corn;
- Thievaliopsis species on soybeans and cotton;
- Tilletia species on cereals;
- Ustilago species on cereals, corn and sugar cane, such as, for example, U. maydis on corn;
- Venturia species (scab) on apples and pears, such as, for example, V. inaequalis on apples.

The compounds I and active compounds II can be applied simultaneously, that is jointly or separately, or in succession, the sequence, in the case of separate application, generally not having any effect on the result of the control measures.

The compounds I and active compounds II can be applied according to the present invention, agriculturally acceptable salts include in particular the salts of those cations or the acid addition salts of those acids whose cations and anions, respectively, have no adverse effect on the fungicidal action of the compounds according to the invention.

Thus, suitable cations are in particular the ions of the alkali metals, preferably sodium and potassium, of the alkaline earth metals, preferably calcium, magnesium and barium, and of the transition metals, preferably manganese, copper, zinc and iron, and also the ammonium ion which, if desired, may carry from one to four ($C_1$-$C_4$)-alkyl substituents and/or one phenyl or benzyl substituent, preferably diisopropylammonium, tetramethylammonium, tetrabutylammonium, trimethylbenzylammonium, and also phosphonium ions, sulfonium ions, preferably tri($C_1$-$C_4$)-alkylsulfonium, and sulfoxonium ions, preferably tri($C_1$-$C_4$)-alkylsulfoxonium.

Anions of advantageously useful acid addition salts are, for example, chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and also the anions of ($C_1$-$C_4$)-alkanoic acids, preferably formate, acetate, propionate and butyrate. They can be formed by reacting the compounds of formula I according to the invention with an acid of the corresponding anion, preferably hydrochloric acid, hydrobromic acid, sulfuric acid, phosphoric acid or nitric acid.

In the definitions of the symbols given for the formulae above, collective terms were used which generally represent the following substituents:

halogen: fluorine, chlorine, bromine and iodine;

alkyl: saturated straight-chain or branched hydrocarbon radicals having 1 to 4, 6 or 8 carbon atoms, for example $C_1$-$C_6$-alkyl, such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl;

haloalkyl: straight-chain or branched alkyl groups having 1 to 2, 4 or 6 carbon atoms (as mentioned above), where some or all of the hydrogen atoms in these groups may be replaced by halogen atoms as mentioned above: in particular $C_1$-$C_2$-haloalkyl such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl and 1,1,1-trifluoroprop-2-yl;

alkenyl: unsaturated straight-chain or branched hydrocarbon radicals having 2 to 4, 6 or 8 carbon atoms and one or two double bonds in any position, for example $C_2$-$C_6$-alkenyl, such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl;

haloalkenyl: unsaturated straight-chain or branched hydrocarbon radicals having 2 to 8 carbon atoms and one or two double bonds in any position (as mentioned above), where some or all of the hydrogen atoms in these groups may be replaced by halogen atoms as mentioned above, in particular fluorine, chlorine and bromine;

alkynyl: straight-chain or branched hydrocarbon groups having 2 to 4, 6 or 8 carbon atoms and one or two triple bonds in any position, for example $C_2$-$C_6$-alkynyl, such as ethynyl, 1-propynyl, 2-propynyl, 1-butynyl, 2-butynyl, 3-butynyl, 1-methyl-2-propynyl, 1-pentynyl, 2-pentynyl, 3-pentynyl, 4-pentynyl, 1-methyl-2-butynyl, 1-methyl-3-butynyl, 2-methyl-3-butynyl, 3-methyl-1-butynyl, 1,1-dimethyl-2-propynyl, 1-ethyl-2-propynyl, 1-hexynyl, 2-hexynyl, 3-hexynyl, 4-hexynyl, 5-hexynyl, 1-methyl-2-pentynyl, 1-methyl-3-pentynyl, 1-methyl-4-pentynyl, 2-methyl-3-pentynyl, 2-methyl-4-pentynyl, 3-methyl-1-pentynyl, 3-methyl-4-pentynyl, 4-methyl-1-pentynyl, 4-methyl-2-pentynyl, 1,1-dimethyl-2-butynyl, 1,1-dimethyl-3-butynyl, 1,2-dimethyl-3-butynyl, 2,2-dimethyl-3-butynyl, 3,3-dimethyl-1-butynyl, 1-ethyl-2-butynyl, 1-ethyl-3-butynyl, 2-ethyl-3-butynyl and 1-ethyl-1-methyl-2-propynyl;

cycloalkyl: mono- or bicyclic saturated hydrocarbon groups having 3 to 6 or 8 carbon ring members, for example $C_3$-$C_8$-cycloalkyl, such as cyclopropyl, cyclobutyl, cyclopentyl, cyclohexyl, cycloheptyl and cyclooctyl.

a 5-, 6-, 7-, 8-, 9- or 10-membered saturated, partially unsaturated or aromatic heterocycle which contains 1, 2, 3 or 4 heteroatoms from the group consisting of oxygen, nitrogen and sulfur:

in particular:

- a five- or six-membered saturated or partially unsaturated heterocycle (hereinbelow also referred to as heterocyclyl) which contains one, two, three or four heteroatoms from the group consisting of oxygen, nitrogen and sulfur as ring members: for example monocyclic saturated or partially unsaturated heterocycles which, in addition to carbon ring members, contain one to three nitrogen atoms and/or one oxygen or sulfur atom or one or two oxygen and/or sulfur atoms, for example 2-tetrahydrofuranyl, 3-tetrahydrofuranyl, 2-tetrahydrothienyl, 3-tetrahydrothienyl, 2-pyrrolidinyl, 3-pyrrolidinyl, 3-isoxazolidinyl, 4-isoxazolidinyl, 5-isoxazolidinyl, 3-isothiazolidinyl, 4-isothiazolidinyl, 5-isothiazolidinyl, 3-pyrazolidinyl, 4-pyrazolidinyl, 5-pyrazolidinyl, 2-oxazolidinyl, 4-oxazolidinyl, 5-oxazolidinyl, 2-thiazolidinyl, 4-thiazolidinyl, 5-thiazolidinyl, 2-imidazolidinyl, 4-imidazolidinyl, 1,2,4-oxadiazolidin-3-yl, 1,2,4-oxadiazolidin-5-yl, 1,2,4-thiadiazolidin-3-yl, 1,2,4-thiadiazolidin-5-yl, 1,2,4-triazolidin-3-yl, 1,3,4-oxadiazolidin-2-yl, 1,3,4-thiadiazolidin-2-yl, 1,3,4-triazolidin-2-yl, 2,3-dihydrofur-2-yl, 2,3-dihydrofur-3-yl, 2,4-dihydrofur-2-yl, 2,4-dihydrofur-3-yl, 2,3-dihydrothien-2-yl, 2,3-dihydrothien-3-yl, 2,4-dihydrothien-2-yl, 2,4-dihydrothien-3-yl, 2-pyrrolin-2-yl, 2-pyrrolin-3-yl, 3-pyrrolin-2-yl, 3-pyrrolin-3-yl, 2-isoxazolin-3-yl, 3-isoxazolin-3-yl, 4-isoxazolin-3-yl, 2-isoxazolin-4-yl, 3-isoxazolin-4-yl, 4-isoxazolin-4-yl, 2-isoxazolin-5-yl, 3-isoxazolin-5-yl, 4-isoxazolin-5-yl, 2-isothiazolin-3-yl, 3-isothiazolin-3-yl, 4-isothiazolin-3-yl, 2-isothiazolin-4-yl, 3-isothiazolin-4-yl, 4-isothiazolin-4-yl, 2-isothiazolin-5-yl, 3-isothiazolin-5-yl, 4-isothiazolin-5-yl, 2,3-dihydropyrazol-1-yl, 2,3-dihydropyrazol-2-yl, 2,3-dihydropyrazol-3-yl, 2,3-dihydropyrazol-4-yl, 2,3-dihydropyrazol-5-yl, 3,4-dihydropyrazol-1-yl, 3,4-dihydropyrazol-3-yl, 3,4-dihydropyrazol-4-yl, 3,4-dihydropyrazol-5-yl, 4,5-dihydropyrazol-1-yl, 4,5-dihydropyrazol-3-yl, 4,5-dihydropyrazol-4-yl, 4,5-dihydropyrazol-5-yl, 2,3-dihydrooxazol-2-yl, 2,3-dihydrooxazol-3-yl, 2,3-dihydrooxazol-4-yl, 2,3-dihydrooxazol-5-yl, 3,4-dihydrooxazol-2-yl, 3,4-dihydrooxazol-3-yl, 3,4-dihydrooxazol-4-yl, 3,4-dihydrooxazol-5-yl, 3,4-dihydrooxazol-2-yl, 3,4-dihydrooxazol-3-yl, 3,4-dihydrooxazol-4-yl, 2-piperidinyl, 3-piperidinyl, 4-piperidinyl, 1,3-dioxan-5-yl, 2-tetrahydropyranyl, 4-tetrahydropyranyl, 2-tetrahydrothienyl, 3-hexahydropyridazinyl, 4-hexahydropyridazinyl, 2-hexahydropyrimidinyl, 4-hexahydropyrimidinyl, 5-hexahydropyrimidinyl, 2-piperazinyl, 1,3,5-hexahydro-triazin-2-yl and 1,2,4-hexahydrotriazin-3-yl and the corresponding -ylidene radicals;
- a seven-membered saturated or partially unsaturated heterocycle which contains one, two, three or four heteroatoms

from the group consisting of oxygen, nitrogen and sulfur as ring members: for example mono- and bicyclic heterocycles having 7 ring members which, in addition to carbon ring members, contain one to three nitrogen atoms and/or one oxygen or sulfur atom or one or two oxygen and/or sulfur atoms, for example tetra- and hexahydroazepinyl, such as 2,3,4,5-tetrahydro[1H]azepin-1-, -2-, -3-, -4-, -5-, -6- or-7-yl, 3,4,5,6-tetrahydro[2H]azepin-2-, -3-, -4-, -5-, -6- or-7-yl, 2,3,4,7-tetrahydro[1 H]azepin-1-, -2-, -3-, -4-, -5-, -6- or -7-yl, 2,3,6,7-tetrahydro[1H]azepin-[1H]azepin-1-, -2-, -3-, -4-, -5-, -6- or -7-yl, hexahydroazepin-1-, -2-, -3- or -4-yl, tetra- and hexahydrooxepinyl, such as 2,3,4,5-tetrahydro[1H]oxepin-2-, -3-, -4-, -5-, -6- or -7-yl, 2,3,4,7-tetrahydro[1H]oxepin-2-, -3-, -4-, -5-, -6- or -7-yl, 2,3,6,7-tetrahydro[1H]oxepin-2-, -3-, -4-, -5-, -6- or -7-yl, hexahydroazepin-1-, -2-, -3- or -4-yl, tetra- and hexahydro-1,3-diazepinyl, tetra- and hexahydro-1,4-diazepinyl, tetra- and hexahydro-1,3-oxazepinyl, tetra- and hexahydro-1,4-oxazepinyl, tetra- and hexahydro-1,3-dioxepinyl, tetra- and hexahydro-1,4-dioxepinyl and the corresponding ylidene radicals;

- a five- or six-membered aromatic heterocycle which contains one, two, three or four heteroatoms from the group consisting of oxygen, nitrogen or sulfur: mono- or bicyclic heteroaryl, for example 5-membered heteroaryl which is attached via carbon and which contains one to three nitrogen atoms or one or two nitrogen atoms and/or one sulfur or oxygen atom as ring members, such as 2-furyl, 3-furyl, 2-thienyl, 3-thienyl, 2-pyrrolyl, 3-pyrrolyl, 3-isoxazolyl, 4-isoxazolyl, 5-isoxazolyl, 3-isothiazolyl, 4-isothiazolyl, 5-isothiazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 2-imidazolyl, 4-imidazolyl, 1,2,4-oxadiazol-3-yl, 1,2,4-oxadiazol-5-yl, 1,2,4-thiadiazol-3-yl, 1,2,4-thiadiazol-5-yl, 1,2,4-triazol-3-yl, 1,3,4-oxadiazol-2-yl, 1,3,4-thiadiazol-2-yl and 1,3,4-triazol-2-yl; 5-membered heteroaryl which is attached via nitrogen and contains one to three nitrogen atoms as ring members, such as pyrrol-1-yl, pyrazol-1-yl, imidazol-1-yl, 1,2,3-triazol-1-yl and 1,2,4-triazol-1-yl; 6-membered heteroaryl which contains one to three nitrogen atoms as ring members, such as pyridin-2-yl, pyridin-3-yl, pyridin-4-yl, 3-pyridazinyl, 4-pyridazinyl, 2-pyrimidinyl, 4-pyrimidinyl, 5-pyrimidinyl, 2-pyrazinyl, 1,3,5-triazin-2-yl and 1,2,4-triazin-3-yl;

The scope of the present invention includes the (R) and (S) isomers and the racemates of compounds of the formula I having chiral centers.

With a view to the intended use of the triazolopyrimidines of formula I, particular preference is given to the following meanings of the substituents, in each case on their own or in combination:

According to one embodiment, $R^7$ is $C_6$-$C_{14}$aryl, preferably phenyl or naphthyl, which is in each case unsubstituted or substituted by $R^a$, as defined herein. In one preferred embodiment of the invention the group $R^7$ is a substituted phenyl group.

In special embodiments of the invention, in each case at least one substituent $R^a$ is located in the ortho-position to the point of attachment of $R^7$ to the skeleton of the formula I. It may be particularly preferred for the $R^c$ in the ortho-position to be fluorine, chlorine, $C_1$-$C_2$-alkyl, such as methyl or ethyl, $C_1$-$C_2$-fluoroalkyl, such as trifluoroalkyl, or $C_1$-$C_2$-alkoxy, such as methoxy.

In a specific embodiment of the invention, $R^7$ is a substituted phenyl group P,

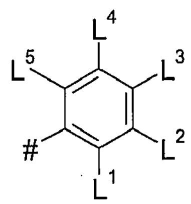

P

in which # is the point of attachment to the skeleton of the formula I and

| | |
|---|---|
| $L^1$ | is fluorine, chlorine, $CH_3$ or $CF_3$; |
| $L^2$, $L^4$ | independently of one another are hydrogen, fluorine or methoxy; |
| $L^3$ | is hydrogen, fluorine, chlorine, CN, $CH_3$, $OCH_3$, $NH_2$, $NHCH_3$, $N(CH_3)_2$, $C(O)NH_2$, $COOCH_3$ or $C(O)CH_3$; and |
| $L^5$ | is hydrogen, fluorine, chlorine or $CH_3$. |

In a further embodiment of the invention, $R^7$ is phenyl which is substituted with one of the following substitution patterns: 2-fluoro-6-chlorophenyl, 2,6-difluorophenyl, 2,6-dichlorophenyl, 2-fluoro-6-methylphenyl, 2,4,6-trifluorophenyl, 2,6-difluoro-4-methoxyphenyl, 2-chloro-4-methoxyphenyl, pentafluorophenyl, 2-methyl-4-fluorophenyl, 2-trifluoromethylphenyl, 2-methoxy-6-fluorophenyl, 2-chlorophenyl, 2-fluorophenyl, 2,4-difluorophenyl, 2-fluoro-4-chlorophenyl, 2-chloro-4-fluorophenyl, 2-chloro-5-fluorophenyl, 2,3-difluorophenyl, 2,5-difluorophenyl, 2,3,4-trifluorophenyl, 2-methylphenyl, 2,4-dimethylphenyl, 2-methyl-4-chlorophenyl, 2-methyl-5-fluorophenyl, 2-fluoro-4-methylphenyl, 2,6-dimethylphenyl,

2,4,6-trimethylphenyl, 2,6-difluoro-4-methylphenyl, 2-trifluoromethyl-4-fluorophenyl, 2-trifluoromethyl-5-fluorophenyl, 2-trifluoromethyl-5-chlorophenyl or 2-fluoro-3-methoxyphenyl.

Preferred substitution patterns of a phenyl group in $R^7$ are selected from 2-fluoro-6-chloro, 2,6-difluoro, 2,6-dichloro, 2-fluoro-6-methyl, 2,4,6-trifluoro, 2,6-difluoro-4-methoxy, 2-chloro-4-methoxy, pentafluoro, 2-methyl-4-fluoro, 2-trifluoromethyl, 2-methoxy-6-fluoro, 2-chloro, 2-fluoro, 2,4-difluoro, 2-fluoro-4-chloro, 2-chloro-4-fluoro, 2-chloro-5-fluoro, 2,3-difluoro, 2,5-difluoro, 2,3,4-trifluoro, 2-methyl, 2,4-dimethyl, 2-methyl-4-chloro, 2-methyl-5-fluoro, 2-fluoro-4-methyl, 2,6-dimethyl, 2,4,6-trimethyl, 2,6-difluoro-4-methyl, 2-trifluoromethyl-4-fluoro, 2-trifluoromethyl-5-fluoro and 2-trifluoromethyl-5-chloro.

In another embodiment of the invention the group $R^7$ is a five- or six-membered aromatic heterocycle which is attached via carbon and which is unsubstituted or substituted by $R^a$, as defined herein, and which contains one, two, three or four heteroatoms from the group consisting of oxygen, nitrogen and sulfur.

In another embodiment of the invention the group $R^7$ is a substituted pyridyl group, further embodiments relate to pyridyl groups selected from pyrid-2-yl, pyrid-3-yl and pyrid-4-yl.

Preferred substitution patterns of a pyrid-2-yl group in $R^7$ are selected from 3-chloro-5-trifluoromethyl, 3,5-dichloro, and 3,5-difluoro.

Preferred substitution patterns of a pyrid-3-yl group in $R^7$ are selected from 2,4,6-trifluoro, and 2,4-difluoro.

A preferred substitution pattern of a pyrid-4-yl group in $R^7$ is 3,5-dichloro.

In another embodiment of the invention the group $R^7$ is a substituted thiophenyl group, preferably a thiophen-3-yl group. A preferred substitution pattern of a thiophen-3-yl group in $R^7$ is 2,5-dichloro.

Another preferred embodiment of the invention relates to compounds of formula I wherein $R^8$ is halogen, preferably chloro.

Another preferred embodiment of the invention relates to compounds of formula I wherein $R^8$ is alkyl, preferably methyl.

Another preferred embodiment of the invention relates to compounds of formula I wherein $R^9$ is hydrogen.

Another preferred embodiment of the invention relates to compounds of formula I wherein $R^9$ is mercapto.

Another preferred embodiment of the invention relates to compounds of formula I wherein $R^9$ is alkylthio, preferably methylthio.

Another preferred embodiment of the invention relates to compounds of formula I wherein $R^1$, $R^2$, $R^3$, $R^4$, $R^{10}$, $R^{11}$, $R^{12}$and $R^{13}$, each independently of each other and independently of anyone of m, n, j and t, are hydrogen, halogen or $C_1$-$C_6$ alkyl; $R^5$ and $R^6$, each independently of each other, are hydrogen, halogen or $C_1$-$C_6$ alkyl; $R^7$ is an substituted phenyl; $R^8$ is $C_1$-$C_3$ alkyl or halogen; $R^9$ is hydrogen, mercapto or methylthio; X is oxygen, sulfur or N-methyl. (m + n) is equal to 0, 1, 2 or 3; (w + j) is equal to 1,2,3 or 4.

Another preferred embodiment of the invention relates to compounds of formula I wherein $R^1$, $R^2$, $R^3$, $R^4$, $R^{10}$, $R^{11}$, $R^{12}$and $R^{13}$, each independently of each other and independently of anyone of m, n, j and t, are hydrogen or $C_1$-$C_3$-alkyl; $R^5$ and $R^6$, each independently of each other, are hydrogen or methyl;
$R^7$ is phenyl substituted at least in one ortho-position with halogen;
$R^8$ is chloro or fluoro;
$R^9$ is hydrogen or mercapto;
X is oxygen or N-methyl. (m + n) is equal to 0,1 or 2;
(w + j) is equal to 1, 2 or 3.

Another preferred embodiment of the invention relates to compounds of formula I wherein $R^1$, $R^2$, $R^3$, $R^4$, $R^{10}$, $R^{11}$, $R^{12}$ and $R^{13}$, each independently of each other and independently of anyone of m, n, j and t, are hydrogen or methyl; $R^5$ and $R^6$, each independently of each other, are hydrogen;
$R^7$ is 2,4,6-trifluorophenyl or 2-chloro-6-fluorophenyl
$R^8$ is chloro;
$R^9$ is hydrogen; X is oxygen.
(m + n) is equal to 1 or 2;
(w + j) is equal to 1 or 2.

Another preferred embodiment of the invention relates to compounds of formula I wherein the substituent in position 7 of the triazolopyrimidine sceleton is selected from
5-methyl-2-aza-bicyclo[2.1.1]hex-2-yl;
7-aza-bicyclo[2.2.1]hept-7-yl;
3-hydroxy-8-aza-bicyclo[3.2. 1]oct-8-yl;
3-aza-bicyclo[3.2.1]oct-3-yl;
2-aza-bicyclo[2.2.2]oct-2-yl;
6-methyl-3-aza-bicyclo[3.1.1]hept-3-yl;
3-methyl-6-aza-bicyclo[3.1.0]hex-6-yl;
3-aza-bicyclo[3.1.0]hex-3-yl;

6-methyl-3-aza-bicyclo[3.1.0]hex-3-yl;
5-methyl-2-aza-bicyclo[3.1.0]hex-2-yl;
3-aza-bicyclo[4.1.0]hept-3-yl;
5-methyl-7-oxa-2-aza-bicyclo[4.1.0]hept-2-yl;
which cyclic groups may be unsubstituted or substituted by one or two, preferably one groups selected from halogen preferably chloro, hydroxy and $C_1$-$C_4$-alkyl preferably methyl.

Further preferred embodiments relate to triazolopyrimidines selected from formulae I.1 to 1.50, in which the variables and the preferred embodiments apply as outlined for formula I:

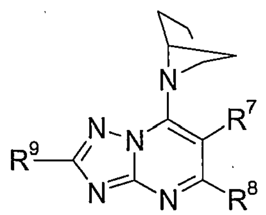
I.1

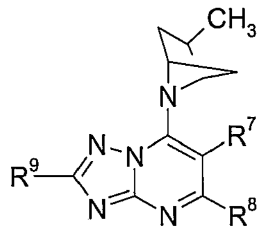
I.2

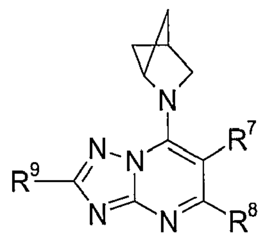
I.3

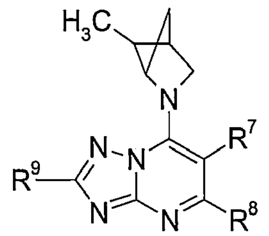
I.4

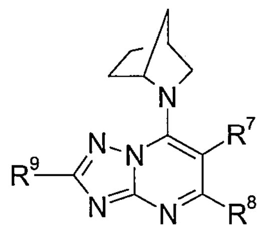
I.5

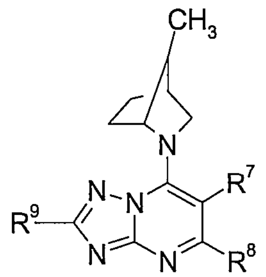
I.6

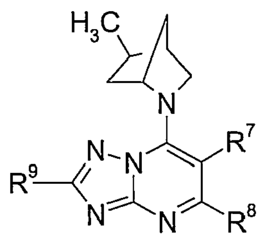
I.7

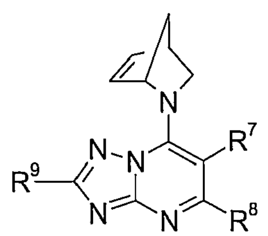
I.8

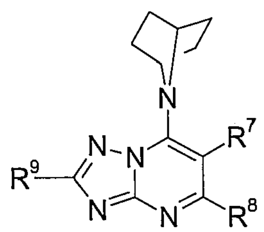
I.9

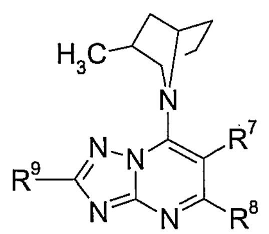
I.10

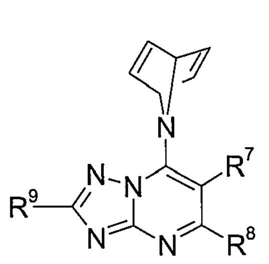

I.11

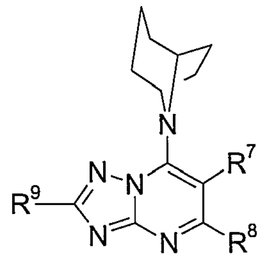

I.12

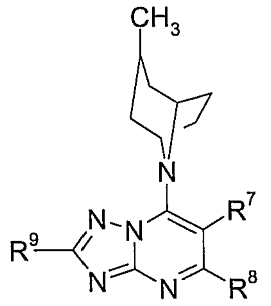

I.13

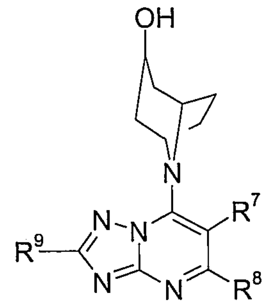

I.14

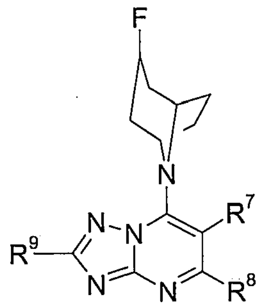

I.15

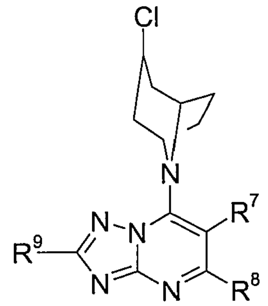

I.16

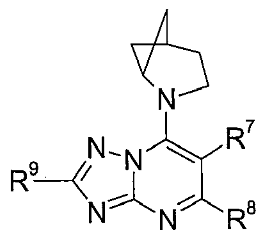

I.17

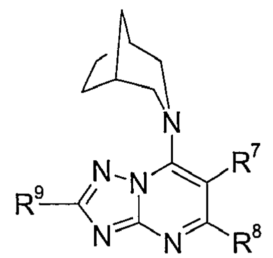

I.18

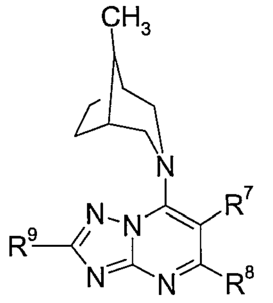

I.19

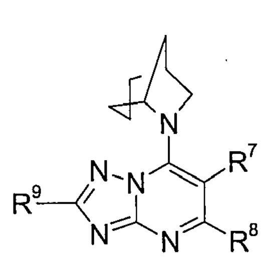

I.20

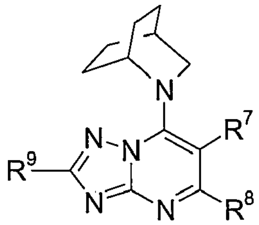

I.21

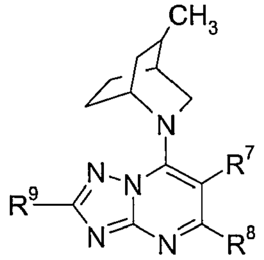

I.22

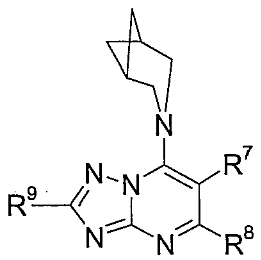

I.23

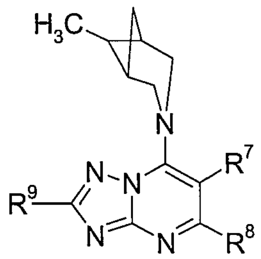

I.24

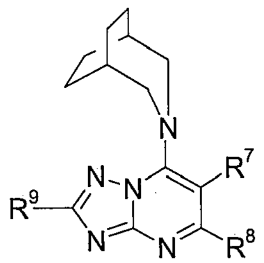

I.25

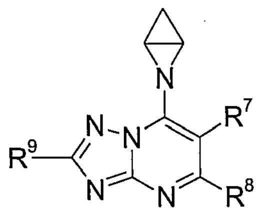

I.26

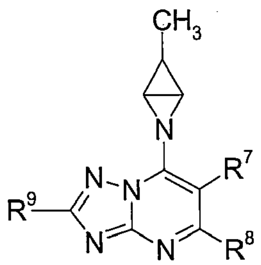

I.27

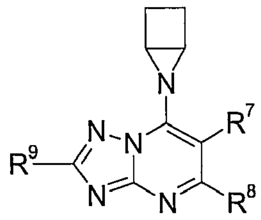

I.28

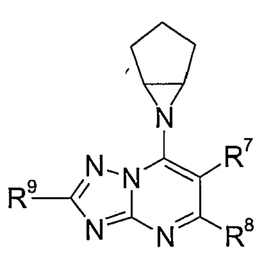

I.29

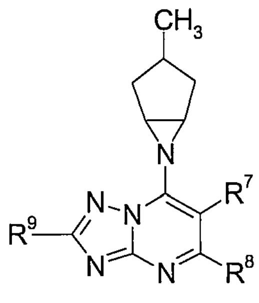

I.30

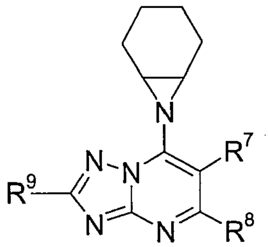 I.31

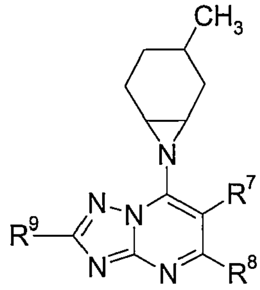 I.32

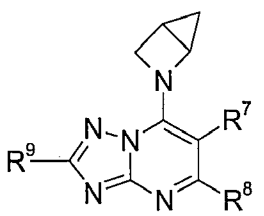 I.33

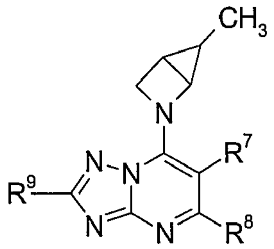 I.34

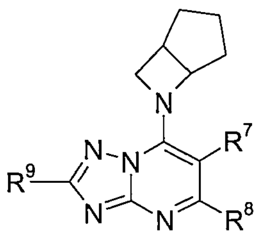 I.35

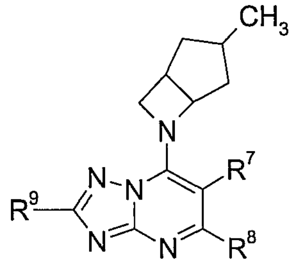 I.36

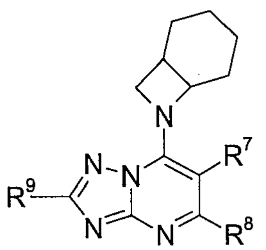 I.37

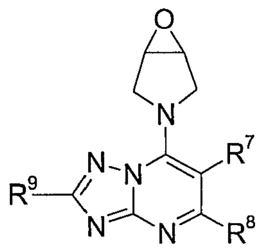 I.38

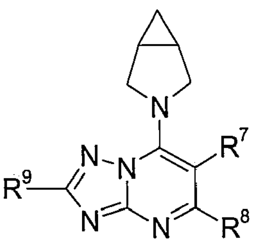 I.39

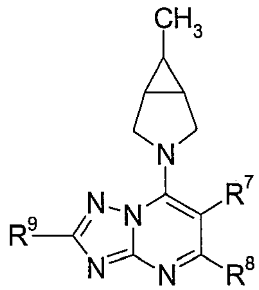 I.40

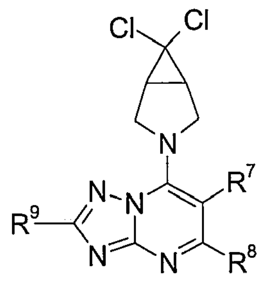

I.41

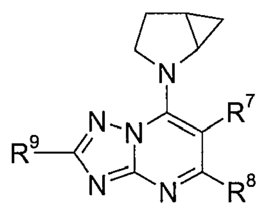

I.42

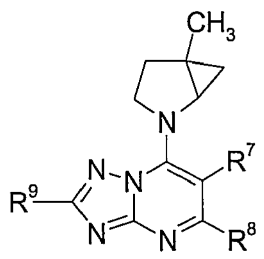

I.43

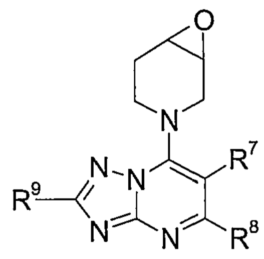

I.44

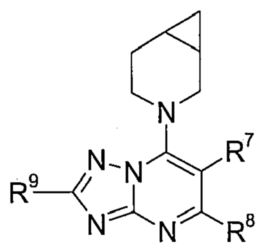

I.45

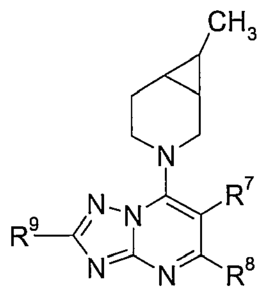

I.46

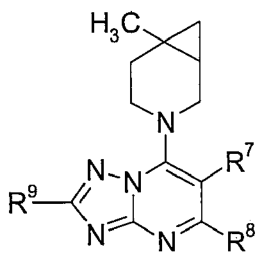

I.47

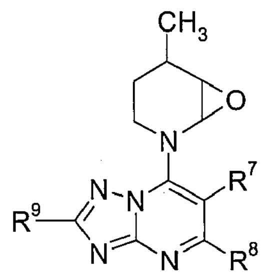

I.48

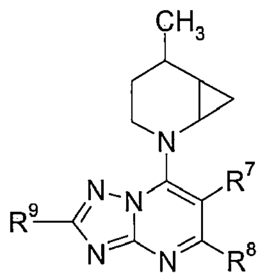

I.49

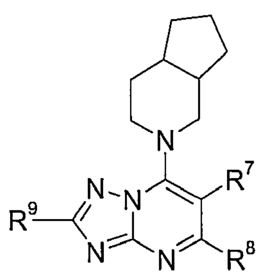

I.50

In particular with a view to their use in the mixtures according to the invention, preference is given to the compounds I compiled in the tables below. Moreover, the groups mentioned for a substituent in the tables are per se, independently of the combination in which they are mentioned, a particularly preferred embodiment of the substituent in question.

Table 1

Compounds of formula I.1 in which the combination of $R^7$, $R^8$ and $R^9$ for each compound corresponds in each case to one row of Table A

Table 2

Compounds of formula 1.2 in which the combination of $R^7$, $R^8$ and $R^9$ for each compound corresponds in each case to one row of Table A

Table 3

Compounds of formula I.3 in which the combination of $R^7$, $R^8$ and $R^9$ for each compound corresponds in each case to one row of Table A

Table 4

Compounds of formula I.4 in which the combination of $R^7$, $R^8$ and $R^9$ for each compound corresponds in each case to one row of Table A

Table 5

Compounds of formula I.5 in which the combination of $R^7$, $R^8$ and $R^9$ for each compound corresponds in each case to one row of Table A

Table 6

Compounds of formula I.6 in which the combination of $R^7$, $R^8$ and $R^9$ for each compound corresponds in each case to one row of Table A

Table 7

Compounds of formula 1.7 in which the combination of $R^7$, $R^8$ and $R^9$ for each compound corresponds in each case to one row of Table A

Table 8

Compounds of formula 1.8 in which the combination of $R^7$, $R^8$ and $R^9$ for each compound corresponds in each case to one row of Table A

Table 9

Compounds of formula 1.9 in which the combination of $R^7$, $R^8$ and $R^9$ for each compound corresponds in each case to one row of Table A

Table 10

Compounds of formula 1.10 in which the combination of $R^7$, $R^8$ and $R^9$ for each compound corresponds in each case to one row of Table A

Table 11

Compounds of formula I.11 in which the combination of $R^7$, $R^8$ and $R^9$ for each compound corresponds in each case to one row of Table A

Table 12

Compounds of formula I.12 in which the combination of $R^7$, $R^8$ and $R^9$ for each compound corresponds in each

case to one row of Table A

Table 13

Compounds of formula 1.13 in which the combination of $R^7$, $R^8$ and $R^9$ for each compound corresponds in each case to one row of Table A

Table 14

Compounds of formula I.14 in which the combination of $R^7$, $R^8$ and $R^9$ for each compound corresponds in each case to one row of Table A

Table 15

Compounds of formula 1.15 in which the combination of $R^7$, $R^8$ and $R^9$ for each compound corresponds in each case to one row of Table A

Table 16

Compounds of formula I.16 in which the combination of $R^7$, $R^8$ and $R^9$ for each compound corresponds in each case to one row of Table A

Table 17

Compounds of formula I.17 in which the combination of $R^7$, $R^8$ and $R^9$ for each compound corresponds in each case to one row of Table A

Table 18

Compounds of formula 1.18 in which the combination of $R^7$, $R^8$ and $R^9$ for each compound corresponds in each case to one row of Table A

Table 19

Compounds of formula I.19 in which the combination of $R^7$, $R^8$ and $R^9$ for each compound corresponds in each case to one row of Table A

Table 20

Compounds of formula I.20 in which the combination of $R^7$, $R^8$ and $R^9$ for each compound corresponds in each case to one row of Table A

Table 21

Compounds of formula 1.21 in which the combination of $R^7$, $R^8$ and $R^9$ for each compound corresponds in each case to one row of Table A

Table 22

Compounds of formula I.22 in which the combination of $R^7$, $R^8$ and $R^9$ for each compound corresponds in each case to one row of Table A

Table 23

Compounds of formula 1.23 in which the combination of $R^7$, $R^8$ and $R^9$ for each compound corresponds in each case to one row of Table A

Table 24

Compounds of formula 1.24 in which the combination of $R^7$, $R^8$ and $R^9$ for each compound corresponds in each case to one row of Table A

Table 25

Compounds of formula 1.25 in which the combination of $R^7$, $R^8$ and $R^9$ for each compound corresponds in each case to one row of Table A

Table 26

Compounds of formula 1.26 in which the combination of $R^7$, $R^8$ and $R^9$ for each compound corresponds in each case to one row of Table A

Table 27

Compounds of formula I.27 in which the combination of $R^7$, $R^8$ and $R^9$ for each compound corresponds in each case to one row of Table A

Table 28

Compounds of formula I.28 in which the combination of $R^7$, $R^8$ and $R^9$ for each compound corresponds in each case to one row of Table A

Table 29

Compounds of formula I.29 in which the combination of $R^7$, $R^8$ and $R^9$ for each compound corresponds in each case to one row of Table A

Table 30

Compounds of formula 1.30 in which the combination of $R^7$, $R^8$ and $R^9$ for each compound corresponds in each case to one row of Table A

Table 31

Compounds of formula 1.31 in which the combination of $R^7$, $R^8$ and $R^9$ for each compound corresponds in each case to one row of Table A

Table 32

Compounds of formula 1.32 in which the combination of $R^7$, $R^8$ and $R^9$ for each compound corresponds in each case to one row of Table A

Table 33

Compounds of formula 1.33 in which the combination of $R^7$, $R^8$ and $R^9$ for each compound corresponds in each case to one row of Table A

Table 34

Compounds of formula 1.34 in which the combination of $R^7$, $R^8$ and $R^9$ for each compound corresponds in each case to one row of Table A

Table 35

Compounds of formula I.35 in which the combination of $R^7$, $R^8$ and $R^9$ for each compound corresponds in each

case to one row of Table A

Table 36

Compounds of formula 1.36 in which the combination of $R^7$, $R^8$ and $R^9$ for each compound corresponds in each case to one row of Table A

Table 37

Compounds of formula I.37 in which the combination of $R^7$, $R^8$ and $R^9$ for each compound corresponds in each case to one row of Table A

Table 38

Compounds of formula I.38 in which the combination of $R^7$, $R^8$ and $R^9$ for each compound corresponds in each case to one row of Table A

Table 39

Compounds of formula 1.39 in which the combination of $R^7$, $R^8$ and $R^9$ for each compound corresponds in each case to one row of Table A

Table 40

Compounds of formula I.40 in which the combination of $R^7$, $R^8$ and $R^9$ for each compound corresponds in each case to one row of Table A

Table 41

Compounds of formula I.41 in which the combination of $R^7$, $R^8$ and $R^9$ for each compound corresponds in each case to one row of Table A

Table 42

Compounds of formula I.42 in which the combination of $R^7$, $R^8$ and $R^9$ for each compound corresponds in each case to one row of Table A

Table 43

Compounds of formula 1.43 in which the combination of $R^7$, $R^8$ and $R^9$ for each compound corresponds in each case to one row of Table A

Table 44

Compounds of formula I.44 in which the combination of $R^7$, $R^8$ and $R^9$ for each compound corresponds in each case to one row of Table A

Table 45

Compounds of formula 1.45 in which the combination of $R^7$, $R^8$ and $R^9$ for each compound corresponds in each case to one row of Table A

Table 46

Compounds of formula I.46 in which the combination of $R^7$, $R^8$ and $R^9$ for each compound corresponds in each case to one row of Table A

Table 47

Compounds of formula I.47 in which the combination of $R^7$, $R^8$ and $R^9$ for each compound corresponds in each case to one row of Table A

Table 48

Compounds of formula I.48 in which the combination of $R^7$, $R^8$ and $R^9$ for each compound corresponds in each case to one row of Table A

Table 49

Compounds of formula I.49 in which the combination of $R^7$, $R^8$ and $R^9$ for each compound corresponds in each case to one row of Table A

Table 50

Compounds of formula I.50 in which the combination of $R^7$, $R^8$ and $R^9$ for each compound corresponds in each case to one row of Table A

Table A

| No. | $R^7$ | $R^8$ | $R^9$ |
|---|---|---|---|
| A-1 | 2-F-$C_6H_4$ | Cl | H |
| A-2 | 2-F-$C_6H_4$ | F | H |
| A-3 | 2-F-$C_6H_4$ | Cl | SH |
| A-4 | 2-Cl-$C_6H_4$ | Cl | H |
| A-5 | 2-Cl-$C_6H_4$ | F | H |
| A-6 | 2-Cl-$C_6H_4$ | Cl | SH |
| A-7 | 2-$CF_3$-$C_6H_4$ | Cl | H |
| A-8 | 2-$CF_3$-$C_6H_4$ | F | H |
| A-9 | 2-$CF_3$-$C_6H_4$ | Cl | SH |
| A-10 | 2-$CH_3$-$C_6H_4$ | Cl | H |
| A-11 | 2-$CH_3$-$C_6H_4$ | F | H |
| A-12 | 2-$CH_3$-$C_6H_4$ | Cl | SH |
| A-13 | 2,3-$F_2$-$C_6H_3$ | Cl | H |
| A-14 | 2,3-$F_2$-$C_6H_3$ | F | H |
| A-15 | 2,3-$F_2$-$C_6H_3$ | Cl | SH |
| A-16 | 2,4-$F_2$-$C_6H_3$ | Cl | H |
| A-17 | 2,4-$F_2$-$C_6H_3$ | F | H |
| A-18 | 2,4-$F_2$-$C_6H_3$ | Cl | SH |
| A-19 | 2,5-$F_2$-$C_6H_3$ | Cl | H |
| A-20 | 2,5-$F_2$-$C_6H_3$ | F | H |
| A-21 | 2,5-$F_2$-$C_6H_3$ | Cl | SH |
| A-22 | 2,6-$F_2$-$C_6H_3$ | Cl | H |
| A-23 | 2,6-$F_2$-$C_6H_3$ | F | H |
| A-24 | 2,6-$F_2$-$C_6H_3$ | Cl | SH |

(continued)

| No. | $R^7$ | $R^8$ | $R^9$ |
|---|---|---|---|
| A-25 | 2-Cl,3-F-$C_6H_3$ | Cl | H |
| A-26 | 2-Cl,3-F-$C_6H_3$ | F | H |
| A-27 | 2-Cl,3-F-$C_6H_3$ | Cl | SH |
| A-28 | 2-Cl,4-F-$C_6H_3$ | Cl | H |
| A-29 | 2-Cl,4-F-$C_6H_3$ | F | H |
| A-30 | 2-Cl,4-F-$C_6H_3$ | Cl | SH |
| A-31 | 2-Cl,5-F-$C_6H_6$ | Cl | H |
| A-32 | 2-Cl,5-F-$C_6H_3$ | F | H |
| A-33 | 2-Cl,5-F-$C_6H_3$ | Cl | SH |
| A-34 | 2-Cl,6-F-$C_6H_3$ | Cl | H |
| A-35 | 2-Cl,6-F-$C_6H_3$ | F | H |
| A-36 | 2-Cl,6-F-$C_6H_3$ | Cl | SH |
| A-37 | 3-Cl,2-F-$C_6H_3$ | Cl | H |
| A-38 | 3-Cl,2-F-$C_6H_3$ | F | H |
| A-39 | 3-Cl,2-F-$C_6H_3$ | Cl | SH |
| A-40 | 4-Cl,2-F-$C_6H_3$ | Cl | H |
| A-41 | 4-Cl,2-F-$C_6H_3$ | F | H |
| A-42 | 4-Cl,2-F-$C_6H_3$ | Cl | SH |
| A-43 | 5-Cl,2-F-$C_6H_3$ | Cl | H |
| A-44 | 5-Cl,2-F-$C_6H_3$ | F | H |
| A-45 | 5-Cl,2-F-$C_6H_3$ | Cl | SH |
| A-46 | 2-F,3-$CF_3$-$C_6H_3$ | Cl | H |
| A-47 | 2-F,3-$CF_3$-$C_6H_3$ | F | H |
| A-48 | 2-F,3-$CF_3$-$C_6H_3$ | Cl | SH |
| A-49 | 2-F,4-$CF_3$-$C_6H_3$ | Cl | H |
| A-50 | 2-F,4-$CF_3$-$C_6H_3$ | F | H |
| A-51 | 2-F,4-$CF_3$-$C_6H_3$ | Cl | SH |
| A-52 | 2-F,5-$CF_3$-$C_6H_3$ | Cl | H |
| A-53 | 2-F,5-$CF_3$-$C_6H_3$ | F | H |
| A-54 | 2-F,5-$CF_3$-$C_6H_3$ | Cl | SH |
| A-55 | 2-F,6-$CF_3$-$C_6H_3$ | Cl | H |
| A-56 | 2-F,6-$CF_3$-$C_6H_3$ | F | H |
| A-57 | 2-F,6-$CF_3$-$C_6H_3$ | Cl | SH |
| A-58 | 2-Cl,3-$CF_3$-$C_6H_3$ | Cl | H |
| A-59 | 2-Cl,3-$CF_3$-$C_6H_3$ | F | H |
| A-60 | 2-Cl,3-$CF_3$-$C_6H_3$ | Cl | SH |
| A-61 | 2-Cl,4-$CF_3$-$C_6H_3$ | Cl | H |
| A-62 | 2-Cl,4-$CF_3$-$C_6H_3$ | F | H |

(continued)

| No. | $R^7$ | $R^8$ | $R^9$ |
|---|---|---|---|
| A-63 | 2-Cl,4-$CF_3$-$C_6H_3$ | Cl | SH |
| A-64 | 2-Cl,5-$CF_3$-$C_6H_3$ | Cl | H |
| A-65 | 2-Cl,5-$CF_3$-$C_6H_3$ | F | H |
| A-66 | 2-Cl,5-$CF_3$-$C_6H_3$ | Cl | SH |
| A-67 | 2-Cl,6-$CF_3$-$C_6H_3$ | Cl | H |
| A-68 | 2-Cl,6-$CF_3$-$C_6H_3$ | F | H |
| A-69 | 2-Cl,6-$CF_3$-$C_6H_3$ | Cl | SH |
| A-70 | 4-F,2-$CF_3$-$C_6H_3$ | Cl | H |
| A-71 | 4-F,2-$CF_3$-$C_6H_3$ | F | H |
| A-72 | 4-F,2-$CF_3$-$C_6H_3$ | Cl | SH |
| A-73 | 4-Cl,2-$CF_3$-$C_6H_3$ | Cl | H |
| A-74 | 4-Cl,2-$CF_3$-$C_6H_3$ | F | H |
| A-75 | 4-Cl,2-$CF_3$-$C_6H_3$ | Cl | SH |
| A-76 | 2-F,3-$CH_3$-$C_6H_3$ | Cl | H |
| A-77 | 2-F,3-$CH_3$-$C_6H_3$ | F | H |
| A-78 | 2-F,3-$CH_3$-$C_6H_3$ | Cl | SH |
| A-79 | 2-F,4-$CH_3$-$C_6H_3$ | Cl | H |
| A-80 | 2-F,4-$CH_3$-$C_6H_3$ | F | H |
| A-81 | 2-F,4-$CH_3$-$C_6H_3$ | Cl | SH |
| A-82 | 2-F,5-$CH_3$-$C_6H_3$ | Cl | H |
| A-83 | 2-F,5-$CH_3$-$C_6H_3$ | F | H |
| A-84 | 2-F,5-$CH_3$-$C_6H_3$ | Cl | SH |
| A-85 | 2-F,6-$CH_3$-$C_6H_3$ | Cl | H |
| A-86 | 2-F,6-$CH_3$-$C_6H_3$ | F | H |
| A-87 | 2-F,6-$CH_3$-$C_6H_3$ | Cl | SH |
| A-88 | 2-Cl,3-$CH_3$-$C_6H_3$ | Cl | H |
| A-89 | 2-Cl,3-$CH_3$-$C_6H_3$ | F | H |
| A-90 | 2-Cl,3-$CH_3$-$C_6H_3$ | Cl | SH |
| A-91 | 2-Cl,4-$CH_3$-$C_6H_3$ | Cl | H |
| A-92 | 2-Cl,4-$CH_3$-$C_6H_3$ | F | H |
| A-93 | 2-Cl,4-$CH_3$-$C_6H_3$ | Cl | SH |
| A-94 | 2-Cl,5-$CH_3$-$C_6H_3$ | Cl | H |
| A-95 | 2-Cl,5-$CH_3$-$C_6H_3$ | F | H |
| A-96 | 2-Cl,5-$CH_3$-$C_6H_3$ | Cl | SH |
| A-97 | 2-Cl,6-$CH_3$-$C_6H_3$ | Cl | H |
| A-98 | 2-Cl,6-$CH_3$-$C_6H_3$ | F | H |
| A-99 | 2-Cl,6-$CH_3$-$C_6H_3$ | Cl | SH |
| A-100 | 4-F,2-$CH_3$-$C_6H_3$ | Cl | H |

(continued)

| No. | $R^7$ | $R^8$ | $R^9$ |
|---|---|---|---|
| A-101 | 4-F,2-$CH_3$-$C_6H_3$ | F | H |
| A-102 | 4-F,2-$CH_3$-$C_6H_3$ | Cl | SH |
| A-103 | 4-Cl,2-$CH_3$-$C_6H_3$ | Cl | H |
| A-104 | 4-Cl,2-$CH_3$-$C_6H_3$ | F | H |
| A-105 | 4-Cl,2-$CH_3$-$C_6H_3$ | Cl | SH |
| A-106 | 2,4,6-$F_3$-$C_6H_2$ | Cl | H |
| A-107 | 2,4,6-$F_3$-$C_6H_2$ | F | H |
| A-108 | 2,4,6-$F_3$-$C_6H_2$ | Cl | SH |
| A-109 | 2,3,6-$F_3$-$C_6H_2$ | Cl | H |
| A-110 | 2,3,6-$F_3$-$C_6H_2$ | F | H |
| A-111 | 2,3,6-$F_3$-$C_6H_2$ | Cl | SH |
| A-112 | 2,3,4-$F_3$-$C_6H_2$ | Cl | H |
| A-113 | 2,3,4-$F_3$-$C_6H_2$ | F | H |
| A-114 | 2,3,4-$F_3$-$C_6H_2$ | Cl | SH |
| A-115 | 2,4,6-$Cl_3$-$C_6H_2$ | Cl | H |
| A-116 | 2,4,6-$Cl_3$-$C_6H_2$ | F | H |
| A-117 | 2,4,6-$Cl_3$-$C_6H_2$ | Cl | SH |
| A-118 | 2,3,6-$Cl_3$-$C_6H_2$ | Cl | H |
| A-119 | 2,3,6-$Cl_3$-$C_6H_2$ | F | H |
| A-120 | 2,3,6-$Cl_3$-$C_6H_2$ | Cl | SH |
| A-121 | 2,3,4-$Cl_3$-$C_6H_2$ | Cl | H |
| A-122 | 2,3,4-$Cl_3$-$C_6H_2$ | F | H |
| A-123 | 2,3,4-$Cl_3$-$C_6H_2$ | Cl | SH |
| A-124 | 2,6-$F_2$,4-$OCH_3$-$C_6H_2$ | Cl | H |
| A-125 | 2,6-$F_2$,4-$OCH_3$-$C_6H_2$ | F | H |
| A-126 | 2,6-$F_2$,4-$OCH_3$-$C_6H_2$ | Cl | SH |
| A-127 | 2,6-$F_2$,4-$OCF_3$-$C_6H_2$ | Cl | H |
| A-128 | 2,6-$F_2$,4-$OCF_3$-$C_6H_2$ | F | H |
| A-129 | 2,6-$F_2$,4-$OCF_3$-$C_6H_2$ | Cl | SH |
| A-130 | 2,6-$F_2$,4-CN-$C_6H_2$ | Cl | H |
| A-131 | 2,6-$F_2$,4-CN-$C_6H_2$ | F | H |
| A-132 | 2,6-$F_2$,4-CN-$C_6H_2$ | Cl | SH |
| A-133 | 2,6-$Cl_2$,4-$OCH_3$-$C_6H_2$ | Cl | H |
| A-134 | 2,6-$Cl_2$,4-$OCH_3$-$C_6H_2$ | F | H |
| A-135 | 2,6-$Cl_2$,4-$OCH_3$-$C_6H_2$ | Cl | SH |
| A-136 | 2,6-$Cl_2$,4-$OCF_3$-$C_6H_2$ | Cl | H |
| A-137 | 2,6-$Cl_2$,4-$OCF_3$-$C_6H_2$ | F | H |
| A-138 | 2,6-$Cl_2$,4-$OCF_3$-$C_6H_2$ | Cl | SH |

(continued)

| No. | $R^7$ | $R^8$ | $R^9$ |
|---|---|---|---|
| A-139 | 2,6-$Cl_2$,4-CN-$C_6H_2$ | Cl | H |
| A-140 | 2,6-$Cl_2$,4-CN-$C_6H_2$ | F | H |
| A-141 | 2,6-$Cl_2$,4-CN-$C_6H_2$ | Cl | SH |
| A-142 | $C_6F_5$ | Cl | H |
| A-143 | $C_6F_5$ | F | H |
| A-144 | $C_6F_5$ | Cl | SH |
| A-145 | 3,5-$F_2$-pyrid-2-yl | Cl | H |
| A-146 | 3,5-$F_2$-pyrid-2-yl | F | H |
| A-147 | 3,5-$F_2$-pyrid-2-yl | Cl | SH |
| A-148 | 3,5-$Cl_2$-pyrid-2-yl | Cl | H |
| A-149 | 3,5-$Cl_2$-pyrid-2-yl | F | H |
| A-150 | 3,5-$Cl_2$-pyrid-2-yl | Cl | SH |
| A-151 | 3-Cl,5-F-pyrid-2-yl | Cl | H |
| A-152 | 3-Cl,5-F-pyrid-2-yl | F | H |
| A-153 | 3-Cl,5-F-pyrid-2-yl | Cl | SH |
| A-154 | 3-F,5-$CF_3$-pyrid-2-yi | Cl | H |
| A-155 | 3-F,5-$CFl_3$-pyrid-2-yl | F | H |
| A-156 | 3-F,5-$CF_3$-pyrid-2-yl | Cl | SH |
| A-157 | 2,4-$F_2$-pyrid-3-yl | Cl | H |
| A-158 | 2,4-$F_2$-pyrid-3-yl | F | H |
| A-159 | 2,4-$F_2$-pyrid-3-yl | Cl | SH |
| A-160 | 2,4,6-$F_3$-pyrid-3-yl | Cl | H |
| A-161 | 2,4,6-$F_3$-pyrid-3-yl | F | H |
| A-162 | 2,4,6-$F_3$-pyrid-3-yl | Cl | SH |
| A-163 | 3,5-$F_2$-pyrid-4-yl | Cl | H |
| A-164 | 3,5-$F_2$-pyrid-4-yl | F | H |
| A-165 | 3,5-$F_2$-pyrid-4-yl | Cl | SH |
| A-166 | 2,5-$F_2$-thiophen-3-yl | Cl | H |
| A-167 | 2,5-$F_2$-thiophen-3-yl | F | H |
| A-168 | 2,5-$Cl_2$-thiophen-3-yl | Cl | SH |

Preferred embodiments of the mixtures according to the invention comprise, as active component 1, a compound selected from the following list:

5-chloro-7-(5-methyl-2-aza-bicyclo[2.1.1]hex-2-yl)-6-(2,4,6-trifluoro-phenyl)-[1,2,4]triazolo[1,5-a]pyrimidine (Compound No. A-106, Tab. 4),
5-chloro-6-(2-chloro-6-fluoro-phenyl)-7-(5-methyl-2-aza-bicyclo[2.1.1]hex-2-yl)-[1,2,4]triazolo[1,5-a]pyrimidine (Compound No. A-34, Tab. 4),
7-(7-aza-bicyclo[2.2.1]hept-7-yl)-5-chloro-6-(2,4,6-trifluoro-phenyl)-[1,2,4]triazolo[1,5-a]pyrimidine (Compound No. A-106, Tab. 9),
7-(7-aza-bicyclo[2.2.1]hept-7-yl)-5-chloro-6-(2-chloro-6-fluoro-phenyl)-[1,2,4]triazolo[1,5-a]pyrimidine (Compound

No. A-34, Tab. 9),
8-[5-chloro-6-(2,4,6-trifluoro-phenyl)-[1,2,4]triazolo[1,5-a]pyrimidin-7-yl]-8-aza-bicyclo[3.2.1]octan-3-ol (Compound No. A-106, Tab. 14),
8-[5-chloro-6-(2-chloro-6-fluoro-phenyl)-[1,2,4]triazolo[1,5-a]pyrimidin-7-yl]-8-aza-bicyclo[3.2.1]octan-3-ol (Compound No. A-34, Tab. 14),
7-(3-aza-bicyclo[3.2.1]oct-3-yl)-5-chloro-6-(2,4,6-trifluoro-phenyl)-[1,2,4]triazolo[1,5-a]pyrimidine (Compound No. A-106, Tab. 18),
7-(3-aza-bicyclo[3.2.1]oct-3-yl)-5-chloro-6-(2-chloro-6-fluoro-phenyl[1,2,4]triazolo[1,5-a]pyrimidine (Compound No. A-34, Tab. 18),
2-[5-chloro-6-(2,4,6-trifluoro-phenyl)-[1,2,4]triazolo[1,5-a]pyrimidin-7-yl]-2-aza-bicyclo[2.2.2]octane (Compound No. A-106, Tab. 21),
2-[5-chloro-6-(2-chloro-6-fluoro-phenyl)-[1,2,4]triazolo[1,5-a]pyrimidin-7-yl]2-aza-bicyclo[2.2.2]octane (Compound No. A-34, Tab. 21),
5-chloro-7-(8-methyl-3-aza-bicyclo[3.1.1]hept-3-yl)-6-(2,4,6-trifluoro-phenyl)-[1,2,4]triazolo[1,5-a]pyrimidine (Compound No. A-106, Tab. 24),
5-chloro-6-(2-chloro-6-fluoro-phenyl)-7-(6-methyl-3-aza-bicyclo[3.1.1]hept-3-yl)-[1,2,4]triazolo[1,5-a]pyrimidine (Compound No. A-34, Tab. 24),
5-chloro-7-(3-methyl-8-aza-bicyclo[3.1.0]hex-6-yl)-6-(2,4,6-trifluoro-phenyl)-[1,2,4]triazolo[1,5-a]pyrimidine (Compound No. A-106, Tab. 30),
5-chloro-6-(2-chloro-6-fluoro-phenyl)-7-(3-methyl-6-aza-bicyclo[3.1.0]hex-6-yl)-[1,2,4]triazolo[1,5-a]pyrimidine (Compound No. A-34, Tab. 30),
7-(3-aza-bicyclo[3.1.0]hex-3-yl)-5-chloro-6-(2,4,6-trifluoro-phenyl)-[1,2,4]triazolo[1 ,5-a]pyrimidine (Compound No. A-106, Tab. 39),
7-(3-aza-bicyclo[3.1.0]hex-3-yl)-5-chloro-6-(2-chloro-6-fluoro-phenyl)-[1,2,4]triazolo[1,5-a]pyrimidine (Compound No. A-34, Tab. 39),
5-chloro-7-(6-methyl-3-aza-bicyclo[3.1.0]hex-3-yl)-6-(2,4,6-trifluoro-phenyl)-[1,2,4]triazolo[1,5-a]pyrimidine (Compound No. A-106, Tab. 40),
5-chloro-6-(2-chloro-6-fluoro-phenyl)-7-(6-methyl-3-aza-bicyclo[3.1.0]hex-3-yl)-[1,2,4]triazolo[1,5-a]pyrimidine (Compound No. A-34, Tab. 40),
5-chloro-7-(5-methyl-2-aza-bicyclo[3.1.0]hex-2-yl)-6-(2,4,6-trifluoro-phenyl)-[1,2,4]triazolo[1 ,5-a]pyrimidine (Compound No. A-106, Tab. 43),
5-chloro-6-(2-chloro-6-fluoro-phenyl)-7-(5-methyl-2-aza-bicyclo[3.1.0]hex-2-yl)-[1,2,4]triazolo[1,5-a]pyrimidine (Compound No. A-34, Tab. 43),
7-(3-aza-bicyclo[4.1.0]hept-3-yl)-5-chloro-6-(2,4,6-trifluoro-phenyl)-[1,2,4]triazolo[1,5-a]pyrimidine (Compound No. A-106, Tab. 45),
7-(3-aza-bicyclo[4.1.0]hept-3-yl)-5-chloro-6-(2-chloro-6-fluoro-phenyl)-[1,2,4]triazolo[1,5- a]pyrimidine (Compound No. A-34, Tab. 45),
5-chloro-7-(5-methyl-7-oxa-2-aza-bicyclo[4.1.0]hept-2-yl)-6-(2,4,6-trifluoro-phenyl)-[1,2,4]triazolo[1,5-a]pyrimidine (Compound No. A-106, Tab. 48),
5-chloro-6-(2-chloro-6-fluoro-phenyl)-7-(5-methyl-7-oxa-2-aza-bicyclo[4.1.0]hept-2-yl)-[1,2,4]triazolo[1,5-a]pyrimidine (Compound No. A-34, Tab. 48).

Further preferred embodiments of the mixtures according to the invention relate to combinations of one of the compounds of Table 1, in particular one of the preferred compounds I hereinabove, and one of the following active compounds II:

Strobilurins selected from azoxystrobin, dimoxystrobin, fluoxastrobin, orysastrobin, picoxystrobin, pyraclostrobin and trifloxystrobin;
azoles selected from cyproconazole, difenoconazole, epoxiconazole, prochloraz, propiconazole, prothioconazole and tebuconazole;
other fungicides selected from chlorothalonil, fosetyl-aluminium, metrafenone and spiroxamine;
carboxamides selected from boscalid, dimethomorph, fluopicolide, mandipropamid, metalaxyl, 3-difluoromethyl-1-methyl-1H-pyrazol-4-carbonic acid-(2-bicyclopropyl-2-yl-phenyl)amide, 3-difluoromethyl-1-methyl-pyrazol-4-carbonic acid-N-(3',4'-dichloro-4-fluoro-biphenyl-2-yl)-amide and 3-difluoromethyl-1-methyl-pyrazol-4-carbonic acid-N-(3',4'-dichloro-5-fluoro-biphenyl-2-yl)-amide;
heterocyclic compounds selected from cyprodinil, fludioxonil, iprovalicarb, and 5-chloro-7-(4-methyl-piperidin-1-yl)-6-(2,4,6-trifluoro-phenyl)-[1,2,4]triazolo[1,5-a]pyrimidine.

According to the present invention, preference is given to combinations of a compound of the formula I and at least one active compound selected from the group consisting of the A) azoles. The invention relates in particular to combinations comprising one of the compounds of the formula I mentioned individually in Tables 1 to 50 and at least one active compound selected from the group consisting of the A) azoles.

Preference is also given to combinations of a compound of the formula I and at least one active compound selected from the group consisting of the B) strobilurins. The invention relates in particular to combinations comprising one of the compounds of the formula I mentioned individually in Tables 1 to 50 and at least one active compound selected from the group consisting of the B) strobilurins.

Preference is given to combinations of a compound of the formula I and at least one active compound selected from the group consisting of the C) carboxamides. The invention relates in particular to combinations comprising one of the compounds of the formula I mentioned individually in Tables 1 to 50 and at least one active compound selected from the group consisting of the C) carboxamides.

Preference is furthermore also given to combinations of a compound of the formula I and at least one active compound selected from the group consisting of the D) heterocyclic compounds. The invention relates in particular to combinations comprising one of the compounds of the formula I mentioned individually in Tables 1 to 50 and at least one active compound selected from the group consisting of the D) heterocyclic compounds.

Preference is furthermore also given to combinations of a compound of the formula I and at least one active compound selected from the group consisting of the E) carbamates. The invention relates in particular to combinations comprising one of the compounds of the formula I mentioned individually in Tables 1 to 50 and at least one active compound selected from the group consisting of the E) carbamates.

Preference is furthermore also given to combinations of a compound of the formula I and at least one active compound selected from the group consisting of the F) other fungicides. The invention relates in particular to combinations comprising one of the compounds of the formula I mentioned individually in Tables 1 to 50 and at least one active compound selected from the group consisting of the F) other fungicides.

Particular preference is also given to combinations of a compound of the formula I, in particular of one of formula I.4, I.9, I.14, 1.18, I.21, 1.24, 1.38, 1.39, I.40, I.41, I.42, I.43, I.44, I.45, 1.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-1 06 of Table 44; A-34 of Table 45; A-1 06 of Table 45; A-34 of Table 46; A-106 of Table 46; A-34 of Table 47; A-106 of Table 47, and at least one active compound selected from the group consisting of the A) azoles, selected from cyproconazole, difenoconazole, epoxiconazole, fluquinconazole, flusilazole, flutriafol, metconazole, myclobutanil, propiconazole, prothioconazole, triadimefon, triadimenol, tebuconazole, tetraconazole, triticonazole, prochloraz, cyazofamid, benomyl and carbendazim.

Particular preference is also given to combinations of a compound of the formula I, in particular of one of formula I.4, I.9, I.14, I.18, I.21, I.24, I.38, I.39, I.40, I.41, 1.42, 1.43, 1.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the A) azoles, selected from cyazofamid, metconazole, fluquiconazole, triadimefon, triadimenol, penconazole, hexaconazole and thiabendazole, in particular selected from penconazole, hexaconazole and thiabendazole.

Particular preference is also given to combinations of a compound of the formula I, in particular of one of formula I.4, I.9, I.14, I.18, I.21, I.24, I.38, I.39, I.40, I.41, I.42, I.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-1 06 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the A) azoles, selected from epoxiconazole, fluquinconazole, flutriafol, metconazole, tebuconazole, triticonazole, prochloraz and carbendazim.

Particular preference is also given to combinations of a compound of the formula I, in particular of one of formula I.4, I.9, I.14, I.18, I.21, I.24, I.38, I.39, I.40, I.41, I.42, I.43, I.44, I.45, 1.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-1 06 of Table 40; A-34 of Table 41; A-106 of Table 41; A-34 of

Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the A) azoles, selected from cyproconazole, difenoconazole, epoxiconazole, propiconazole, prochloraz, prothioconazole and tebuconazole, in particular selected from cyproconazole, difenoconazole and propiconazole.

Particular preference is also given to combinations of a compound of the formula I, in particular of one of formula I.4, I.9, I.14, I.18, I.21, I.24, I.38, 1.39, I.40, I.41, I.42, 1.43, 1.44, 1.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the B) strobilurins, selected from azoxystrobin, dimoxystrobin, fluoxastrobin, kresoxim-methyl, orysastrobin, picoxystrobin, pyraclostrobin and trifloxystrobin.

Particular preference is also given to combinations of a compound of the formula I, in particular of one of formula I.4, I.9, I.14, I.18, I.21, I.24, I.38, 1.39, I.40, I.41, I.42, I.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-1 06 of Table 44; A-34 of Table 45; A-106 of Table 45; A-34 of Table 46; A-1 06 of Table 46; A-34 of Table 47; A-106 of Table 47, and at least one active compound selected from the group consisting of the B) strobilurins, selected from kresoxim-methyl, orysastrobin and pyraclostrobin.

Very particular preference is also given to compositions of a compound of the formula I, in particular of one of formula I.4, I.9, I.14, I.18, I.21, I.24, 1.38, I.39, 1.40, I.41, I.42, I.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and pyraclostrobin.

Preference is also given to compositions of a compound of the formula I, in particular of one of formula I.4, 1.9, 1.14, 1.18, 1.21, 1.24, 1.38, 1.39, 1.40, I.41, I.42, 1.43, 1.44, 1.45, 1.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the B) strobilurins, selected from azoxystrobin, fluoxastrobin, orysastrobin, picoxystrobin, pyraclostrobin and trifloxystrobin, in particular selected from azoxystrobin and picoxystrobin.

Preference is also given to compositions of a compound of the formula I, in particular of one of formula I.4, 1.9, I.14, I.18, 1.21, 1.24, 1.38, 1.39, 1.40, I.41, 1.42, I.43, 1.44, 1.45, 1.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-1 06 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the C) carboxamides, selected from fenhexamid, metalaxyl, mefenoxam, ofurace, dimethomorph, flumorph, fluopicolid (picobenzamid), zoxamide, carpropamid and mandipropamid.

Particular preference is also given to compositions of a compound of the formula I, in particular of one of formula I.4, 1.9, 1.14, 1.18, 1.21, 1.24, 1.38, 1.39, 1.40, I.41, 1.42, 1.43, 1.44, 1.45, 1.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the C) carboxamides, selected from fenhexamid, metalaxyl, mefenoxam, ofurace, dimethomorph, zoxamide and carpropamid.

Particular preference is also given to compositions of a compound of the formula I, in particular of one of formula I.4, 1.9, I.14, 1.18, 1.21, 1.24, 1.38, I.39, 1.40, I.41, I.42, I.43, 1.44, I.45, 1.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the C) carboxamides, selected from fenhexamid and oxadixyl.

Preference is also given to compositions of a compound of the formula I, in particular of one of formula I.4, I. 9, I.14, I.18, I.21, 1.24, I.38, I.39, I.40, I.41, I.42, I.43, I.44, 1.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the C) carboxamides, selected from boscalid, dimethomorph, metalaxyl, mandipropamid, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide and fluopicolid (picobenzamid), in particular selected from metalaxyl, mandipropamid, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide and fluopicolid (picobenzamid).

Preference is also given to compositions of a compound of the formula I, in particular of one of formula I.4, I. 9, I.14, I.18, I.21, I.24, I.38, I.39, I.40, I.41, I.42, I.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the D) heterocylic compounds, selected from fluazinam, cyprodinil, fenarimol, mepanipyrim, pyrimethanil, triforine, fludioxonil, dodemorph, fenpropimorph, tridemorph, fenpropidin, iprodione, vinclozolin, famoxadone, fenamidone, probenazole, 5-chloro-7-(4-methylpiperidin-1-yl)-6-(2,4,6-trifluorophenyl)-[1,2,4]triazolo[1,5-a]pyrimidine, proquinazid, acibenzolar-S-methyl, captafol, folpet, fenoxanil and quinoxyfen, in particular fluazinam, cyprodinil, fenarimol, mepanipyrim, pyrimethanil, triforine, fludioxonil, dodemorph, fenpropimorph, tridemorph, fenpropidin, iprodione, vinclozolin, famoxadone, fenamidone, probenazole, proquinazid, acibenzolar-S-methyl, captafol, folpet, fenoxanil and quinoxyfen.

Particular preference is also given to compositions of a compound of the formula I, in particular of one of formula I.4, 1.9, 1.14, 1.18, I.21, 1.24, I.38, I.39, I.40, I.41, I.42, 1.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-1 06 of Table 40; A-34 of Table 41; A-106 of Table 41; A-34 of Table 42; A-106 of Table 42; A-34 of Table 43; A-106 of Table 43; A-34 of Table 44; A-1 06 of Table 44; A-34 of Table 45; A-1 06 of Table 45; A-34 of Table 46; A-1 06 of Table 46; A-34 of Table 47; A-106 of Table 47, and at least one active compound selected from the group consisting of the D) heterocyclic compounds, selected from tridemorph, iprodione, pyrimethanil, fenpropimorph, fenpropidin, acibenzolar-S-methyl and pyrifenox, in particular selected from fenpropimorph, fenpropidin, acibenzolar-S-methyl and pyrifenox.

Particular preference is also given to compositions of a compound of the formula I, in particular of one of formula I.4, I.9, I.14, 1.18, I.21, I.24, I.38, I.39, I.40, I.41, 1.42, I.43, I.44, I.45, 1.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-1 06 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-1 06 of Table 45; A-34 of Table 46; A-1 06 of Table 46; A-34 of Table 47; A-106 of Table 47, and at least one active compound selected from the group consisting of the D) heterocyclic compounds, selected from pyrimethanil, dodemorph, fenpropimorph, tridemorph, iprodione, vinclozolin, 5-chloro-7-(4-methylpiperidin-1-yl)-6-(2,4,6-trifluoro-phenyl)-[1,2,4]triazolo[1,5-a]pyrimidine and quinoxyfen, in particular pyrimethanil, dodemorph, fenpropimorph, tridemorph, iprodione, vinclozolin and quinoxyfen.

Preference is also given to compositions of a compound of the formula I, in particular of one of formula I.4, I. 9, I.14, I.18, I.21, I.24, I.38, I.39, I.40, I.41, I.42, I.43, 1.44, I.45, I.46, or 1.47, especially the individual compounds A-34

of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the D) heterocylic compounds, selected from fludioxonil, cyprodinil and 5-chloro-7-(4-methylpiperidin-1-yl)-6-(2,4,6-trifluorophenyl)-[1,2,4]triazolo[1,5-a]pyrimidine, in particular selected from fludioxonil and cyprodinil.

Preference is also given to compositions of a compound of the formula I, in particular of one of formula I.4, I. 9, I.14, I.18, I.21, I.24, I.38, I.39, I40, I.41, I.42, I.43, I.44, 1.45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the E) carbamates, selected from mancozeb, metiram, propineb, thiram, iprovalicarb, flubenthiavalicarb and propamocarb.

Particular preference is also given to compositions of a compound of the formula I, in particular of one of formula I.4, 1.9, 1.14, 1.18, 1.21, I.24, 1.38, 1.39, 1.40, I.41, 1.42, 1.43, I.44, I.45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-1 06 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the E) carbamates, selected from mancozeb and metiram.

Preference is also given to compositions of a compound of the formula I, in particular of one of formula I.4, I. 9, I.14, I.18, I.21, I.24, I.38, I39, I.40, I.41, I.42, I.43, I.44, I.45, I.46, or 1.47, especially the individual compounds A-34 of Table 4; A-34 of Table 9; A-1 06 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the E) carbamates, selected from iprovalicarb and metiram, preferably iprovalicarb.

Preference is also given to compositions of a compound of the formula I, in particular of one of formula I.4, I. 9, I.14, 1.18, I.21, 1.24, I.38, I.39, I.40, I.41, I.42, I.43, I.44, I.45, 1.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the F) other fungicides, selected from chlorothalonil, fosetyl, fosetyl-aluminum, metrafenone and spiroxamine.

Particular preference is also given to compositions of a compound of the formula I, in particular of one of formula I.4, I.9, I.14, 1.18, I.21, I.24, I.38, I.39, I.40, I.41, I.42, I.43, I.44, I.45, I.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one active compound selected from the group consisting of the F) other fungicides, selected from phosphorous acid and its salts, chlorothalonil and metrafenone.

Preference is also given to three-compound compositions of a compound of the formula I, in particular of one of formula I.4, I.9, I.14, I.18, I.21, I.24, I.38, I.39, I.40, I.41, I.42, I.43, 1.44, 1.45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and two of the active compounds II mentioned above or mentioned as being preferred.

Preferred active compound combinations according to the present invention are listed in Tables M-1 to M-29 below:

Table M-1
Fungicidal compositions in which component 1) is one of the compounds of the formula I given in Tables 1 to 50 and component 2) is propiconazole.

Table M-2
Fungicidal compositions in which component 1) is one of the compounds of the formula I given in Tables 1 to 50 and component 2) is cyproconazole.

Table M-3
Fungicidal compositions in which component 1) is one of the compounds of the formula I given in Tables 1 to 50 and component 2) is difenoconazole.

Table M-4
Fungicidal compositions in which component 1) is one of the compounds of the formula I given in Tables 1 to 50 and component 2) is prochloraz.

Table M-5
Fungicidal compositions in which component 1) is one of the compounds of the formula I given in Tables 1 to 50 and component 2) is prothioconazole.

Table M-6
Fungicidal compositions in which component 1) is one of the compounds of the formula I given in Tables 1 to 50 and component 2) is tebuconazole.

Table M-7
Fungicidal compositions in which component 1) is one of the compounds of the formula I given in Tables 1 to 50 and component 2) is epoxiconazole.

Table M-8
Fungicidal compositions in which component 1) is one of the compounds of the formula I given in Tables 1 to 50 and component 2) is azoxystrobin.

Table M-9
Fungicidal compositions in which component 1) is one of the compounds of the formula I given in Tables 1 to 50 and component 2) is picoxystrobin.

Table M-10
Fungicidal compositions in which component 1) is one of the compounds of the formula I given in Tables 1 to 50 and component 2) is fluoxastrobin.

Table M-11
Fungicidal compositions in which component 1) is one of the compounds of the formula I given in Tables 1 to 50 and component 2) is trifloxystrobin.

Table M-12
Fungicidal compositions in which component 1) is one of the compounds of the formula I given in Tables 1 to 50 and component 2) is orysastrobin.

Table M-13
Fungicidal compositions in which component 1) is one of the compounds of the formula I given in Tables 1 to 50 and component 2) is pyraclostrobin.

Table M-14
Fungicidal compositions in which component 1) is one of the compounds of the formula I given in Tables 1 to 50 and component 2) is dimoxystrobin.

Table M-15
Fungicidal compositions in which component 1) is one of the compounds of the formula I given in Tables 1 to 50 and component 2) is metalaxyl.

Table M-16
Fungicidal compositions in which component 1) is one of the compounds of the formula I given in Tables 1 to 50 and component 2) is mandipropamid.

Table M-17
Fungicidal compositions in which component 1) is one of the compounds of the formula I given in Tables 1 to 50 and component 2) is fluopicolid.

Table M-18
Fungicidal compositions in which component 1) is one of the compounds of the formula I given in Tables 1 to 50

and component 2) is boscalid.
Table M-19
Fungicidal compositions in which component 1) is one of the compounds of the formula I given in Tables 1 to 50 and component 2) is dimethomorph.
Table M-20
Fungicidal compositions in which component 1) is one of the compounds of the formula I given in Tables 1 to 50 and component 2) is N-(3',4'-dichloro-4-fluorobiphenyl-2-yl)-3-difluoromethyl-1-methyl-1 H-pyrazole-4-carboxamide.
Table M-21
Fungicidal compositions in which component 1) is one of the compounds of the formula I given in Tables 1 to 50 and component 2) is N-(3',4'-dichloro-5-fluorobiphenyl-2-yl)-3-difluoromethyl-1-methyl-1H-pyrazole-4-carboxamide.
Table M-22
Fungicidal compositions in which component 1) is one of the compounds of the formula I given in Tables 1 to 50 and component 2) is N-(2-bicyclopropyl-2-ylphenyl)-3-difluoromethyl-1-methyl-1 H-pyrazole-4-carboxamide.
Table M-23
Fungicidal compositions in which component 1) is one of the compounds of the formula I given in Tables 1 to 50 and component 2) is cyprodinil.
Table M-24
Fungicidal compositions in which component 1) is one of the compounds of the formula I given in Tables 1 to 50 and component 2) is fludioxonil.
Table M-25
Fungicidal compositions in which component 1) is one of the compounds of the formula I given in Tables 1 to 50 and component 2) is 5-chloro-7-(4-methylpiperidin-1-yl)-6-(2,4,6-trifluorophenyl)[1,2,4]triazolo[1,5-a]pyrimidine.
Table M-26
Fungicidal compositions in which component 1) is one of the compounds of the formula I given in Tables 1 to 50 and component 2) is iprovalicarb.
Table M-27
Fungicidal compositions in which component 1) is one of the compounds of the formula I given in Tables 1 to 50 and component 2) is chlorothalonil.
Table M-28
Fungicidal compositions in which component 1) is one of the compounds of the formula I given in Tables 1 to 50 and component 2) is fosetyl-Al.
Table M-29
Fungicidal compositions in which component 1) is one of the compounds of the formula I given in Tables 1 to 50 and component 2) is spiroxamine.
Table M-30
Fungicidal compositions in which component 1) is one of the compounds of the formula I given in Tables 1 to 50 and component 2) is metrafenone.

The compositions of compound(s) I, in particular of one of formula I.4, 1.9, I.14, I.18, I.21, I.24, I.38, I.39, I.40, I.41, I.42, I.43, I.44, I.45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-1 06 of Table 44; A-34 of Table 45; A-1 06 of Table 45; A-34 of Table 46; A-106 of Table 46; A-34 of Table 47; A-106 of Table 47, and at least one of the active compounds II, or at least one compound I and at least one of the active compounds II applied simultaneously, that is jointly or separately, have excellent activity against a broad spectrum of phytopathogenic fungi, in particular from the classes of the Ascomycetes, Basidiomycetes, Deuteromycetes and Peronosporomycetes (syn. Oomycetes). Some of them are systemically effective and can be employed in crop protection as foliar fungicides, as fungicides for seed dressing and as soil fungicides. They can also be used for treating seed.

The compositions according to the invention are also suitable for controlling harmful fungi in the protection of materials (for example wood, paper, paint dispersions, fibers or fabrics) and in the protection of stored products. In the protection of wood, particular attention is paid to the following harmful fungi: Ascomycetes, such as Ophiostoma spp., Ceratocystis spp., Aureobasidium pullulans, Sclerophoma spp., Chaetomium spp., Humicola spp., Petriella spp., Trichurus spp.; Basidiomycetes, such as Coniophora spp., Coriolus spp., Gloeophyllum spp., Lentinus spp., Pleurotus spp., Poria spp., Serpula spp. and Tyromyces spp., Deuteromycetes, such as Aspergillus spp., Cladosporium spp., Penicillium spp., Trichoderma spp., Alternaria spp., Paecilomyces spp. and Zygomycetes, such as Mucor spp., additionally in the protection of materials the following yeasts: Candida spp. and Saccharomyces cerevisae.

The compound(s) I, in particular compounds I.4, I.9, I.14, I.18, I.21, I.24, I.38, I.39, I.40, I.41, I.42, I.43, I.44, I. 45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-1 06 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one of the active compounds II can be applied simultaneously, that is jointly or separately, or in succession, the sequence, in the case of separate application, generally not having any effect on the result of the control measures.

The compounds of formula I, in particular compounds I.4, I.9, 1.14, 1.18, I.21, I.24, I.38, 1.39, I.40, I.41, I.42, 1.43, I.44, I.45, 1.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one of the active compounds II, can be employed in transgenic crops which are resistant to herbicides from the group consisting of the sulfonylureas, imidazolinones, glufosinate-ammonium or glyphosate-isopropylammonium and analogous active substances (see for example, EP-A 242 236, EP-A 242 246) (WO 92/00377) (EP-A 257 993, US 5,013,659) or in transgenic crop plants, for example cotton, with the capability of producing Bacillus thuringiensis toxins (Bt toxins) which make the plants resistant to certain pests (EP-A 142 924, EP-A 193 259).

The compound(s) of formula I, in particular compounds I.4, I.9, I.14, I.18, I.21, I.24, 1.38, I.39, 1.40, I.41, 1.42, 1.43, I.44, I.45, 1.46, or I.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table 40; A-106 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one of the active compounds II, can be used also for the treatment of plants which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The combinations of active compounds according to the invention can be prepared, for example, in the form of directly sprayable solutions, powders and suspensions or in the form of highly concentrated aqueous, oily or other suspensions, dispersions, emulsions, oil dispersions, pastes, dusts, compositions for spreading or granules, and be applied by spraying, atomizing, dusting, broadcasting or watering or colored suspension, solution, emulsion to be applied as such or as water based slurry with seed treatment machinery. The use form depends on the particular purpose; in each case, it should ensure a distribution of the mixture according to the invention, which is as fine and uniform as possible.

The combinations of active compounds can be converted into the customary formulations, for example solutions, emulsions, suspensions, dusts, powders, pastes and granules. The use form depends on the particular intended purpose; in each case, it should ensure a fine and even distribution of the compound according to the invention.

The formulations are prepared in a known manner (see e.g. for review US 3,060,084, EP-A 707 445 (for liquid concentrates), Browning, " Agglomeration" , Chemical Engineering, Dec. 4, 1967, 147-48, Perry' s Chemical Engineer' s Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8), for example by extending the active compound with auxiliaries suitable for the formulation of agrochemicals, such as solvents and/or carriers, if desired emulsifiers, surfactants and dispersants, preservatives, antifoaming agents, anti-freezing agents, for seed treatment formulation also optionally colorants and/or binders and/or gelling agents.

Examples of suitable solvents are water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used.

Suitable emulsifiers are nonionic and anionic emulsifiers (for example polyoxyethylene fatty alcohol ethers, alkylsulfonates and arylsulfonates).

Examples of dispersants are lignin-sulfite waste liquors and methylcellulose.

Suitable surfactants used are alkali metal, alkaline earth metal and ammonium salts of lignosulfonic acid, naphthalenesulfonic acid, phenolsulfonic acid, dibutylnaphthalene-sulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, highly polar solvents, for example dimethyl sulfoxide, N-methylpyrrolidone or water.

Also anti-freezing agents such as glycerin, ethylene glycol, propylene glycol and bactericides such as can be added to the formulation.

Suitable antifoaming agents are for example antifoaming agents based on silicon or magnesium stearate.

Suitable preservatives are for example dichlorophen und enzylalkoholhemiformal.

Seed Treatment formulations may additionally comprise binders and optionally colorants.

Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

An Example of a gelling agent is carrageen (Satiagel®).

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers.

Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

In general, the formulations comprise from 0.01 to 95% by weight, preferably from 0.1 to 90% by weight, of the active compound(s). In this case, the active compound(s) are employed in a purity of from 90% to 100% by weight, preferably 95% to 100% by weight(according to NMR spectrum).

The active compound concentrations in the ready-to-use preparations can be varied within relatively wide ranges. In general, they are from 0.0001 to 10%, preferably from 0.01 to 1% per weight.

The active compounds may also be used successfully in the ultra-low-volume process (ULV), it being possible to apply formulations comprising over 95% by weight of active compound, or even to apply the active compound without additives.

For seed treatment purposes, respective formulations can be diluted 2-10 fold leading to concentrations in the ready to use preparations of 0,01 to 60% by weight active compound by weight, preferably 0,1 to 40% by weight.

The compound(s) of formula I, in particular compounds I.4, I.9, 1.14, 1.18, I.21, 1.24, I.38, I.39, I.40, I.41, I.42, I.43, I.44, I.45, I.46, or 1.47, especially the individual compounds A-34 of Table 4; A-34 of Table 9; A-106 of Table 9; A-34 of Table 14; A-106 of Table 14; A-34, Table 18; A-106 of Table 18; A-34 of Table 21; A-106 of Table 21; A-34 of Table 24; A-106 of Table 24; A-34 of Table 38; A-106 of Table 38; A-34 of Table 39; A-106 of Table 39; A-34 of Table

40; A-1 06 of Table 40; A-34 of Table 41; A-106 of Table 41; A-34 of Table 42; A-106 of Table 42; A-34 of Table 43; A-106 of Table 43; A-34 of Table 44; A-106 of Table 44; A-34 of Table 45; A-106 of Table 45; A-34 of Table 46; A-106 of Table 46; A-34 of Table 47; A-106 of Table 47, and at least one of the active compounds II, can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; they are intended to ensure in each case the finest possible distribution of the active compound(s) according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. However, it is also possible to prepare concentrates composed of active substance, wetter, tackifier, dispersant or emulsifier and, if appropriate, solvent or oil, and such concentrates are suitable for dilution with water.

The following are examples of formulations:

1. Products for dilution with water for foliar applications. For seed treatment purposes, such products may be applied to the seed diluted or undiluted.

A) Water-soluble concentrates (SL, LS)
10 parts by weight of the active compound(s) are dissolved in 90 parts by weight of water or a water-soluble solvent. As an alternative, wetters or other auxiliaries are added. The active compound(s) dissolves upon dilution with water, whereby a formulation with 10 % (w/w) of active compound(s) is obtained.

B) Dispersible concentrates (DC)
20 parts by weight of the active compound(s) are dissolved in 70 parts by weight of cyclohexanone with addition of 10 parts by weight of a dispersant, for example polyvinylpyrrolidone. Dilution with water gives a dispersion, whereby a formulation with 20% (w/w) of active compound(s) is obtained.

C) Emulsifiable concentrates (EC)
15 parts by weight of the active compound(s) are dissolved in 7 parts by weight of xylene with addition of calcium dodecylbenzenesulfonate and castor oil ethoxylate (in each case 5 parts by weight). Dilution with water gives an emulsion, whereby a formulation with 15% (w/w) of active compound(s) is obtained.

D) Emulsions (EW, EO, ES)
25 parts by weight of the active compound(s) are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion. Dilution with water gives an emulsion, whereby a formulation with 25% (w/w) of active compound(s) is obtained.

E) Suspensions (SC, OD, FS)
In an agitated ball mill, 20 parts by weight of the active compound(s) are comminuted with addition of 10 parts by weight of dispersants, wetters and 70 parts by weight of water or of an organic solvent to give a fine active compound(s) suspension. Dilution with water gives a stable suspension of the active compound(s), whereby a formulation with 20% (w/w) of active compound(s) is obtained.

F) Water-dispersible granules and water-soluble granules (WG, SG)
50 parts by weight of the active compound(s) are ground finely with addition of 50 parts by weight of dispersants and welters and made as water-dispersible or water-soluble granules by means of technical appliances (for example extrusion, spray tower, fluidized bed). Dilution with water gives a stable dispersion or solution of the active compound(s), whereby a formulation with 50% (w/w) of active compound(s) is obtained.

G) Water-dispersible powders and water-soluble powders (WP, SP, SS, WS)
75 parts by weight of the active compound(s) are ground in a rotor-stator mill with addition of 25 parts by weight of dispersants, wetters and silica gel. Dilution with water gives a stable dispersion or solution of the active compound(s), whereby a formulation with 75% (w/w) of active compound(s) is obtained.

Gel-Formulation (GF)

In an agitated ball mill, 20 parts by weight of the active compound(s) are comminuted with addition of 10 parts by weight of dispersants, 1 part by weight of a gelling agent wetters and 70 parts by weight of water or of an organic solvent to give a fine active compound(s) suspension. Dilution with water gives a stable suspension of the active compound(s), whereby a formulation with 20% (w/w) of active compound(s) is obtained.

2. Products to be applied undiluted for foliar applications. For seed treatment purposes, such products may be applied to the seed diluted.

I) Dustable powders (DP, DS)
5 parts by weight of the active compound(s) are ground finely and mixed intimately with 95 parts by weight of finely divided kaolin. This gives a dustable product having 5% (w/w) of active compound(s)

J) Granules (GR, FG, GG, MG)
0.5 part by weight of the active compound(s) is ground finely and associated with 95.5 parts by weightof carriers, whereby a formulation with 0.5% (w/w) of active compound(s) is obtained. Current methods are extrusion, spray-drying or the fluidized bed. This gives granules to be applied undiluted for foliar use.

K) ULV solutions (UL)
10 parts by weight of the active compound(s) are dissolved in 90 parts by weight of an organic solvent, for example xylene. This gives a product having 10% (w/w) of active compound(s), which is applied undiluted for foliar use.

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulation can be applied to the seed diluted or undiluted. Application to the seeds is carried out before sowing, either directly on the seeds.
In a preferred embodiment a FS formulation is used for seed treatment. Typcially, a FS formulation may comprise 1-800 g/l of active ingredient, 1-200 g/l Surfactant, 0 to 200 g/l antifreezing agent, 0 to 400 g/l of binder, 0 to 200 g/l of a pigment and up to 1 liter of a solvent, preferably water.
Various types of oils, welters, adjuvants, herbicides, fungicides, other pesticides, or bactericides may be added to the active compounds, if appropriate not until immediately prior to use (tank mix). These agents can be admixed with the agents according to the invention in a weight ratio of 1:100 to 100:1, preferably 1:10 to 10:1.
Suitable adjuvants in this sense are in particular: organically modified polysiloxanes, for example Break Thru S 240®; alcohol alkoxylates, for example Atplus 245®, Atplus MBA 1303®, Plurafac LF 300® and Lutensol ON 30®; EO/PO block polymers, for example Pluronic RPE 2035® and Genapol B®; alcohol ethoxylates, for example Lutensol XP 80®; and sodium dioctylsulfosuccinate, for example Leophen RA®.

Use examples

The fungicidal action of the individual compounds and of the compositions according to the invention can be demonstrated by the tests below.
The active compounds, separately or jointly, were prepared as a stock solution comprising 0.25% by weight of active compound in acetone or DMSO. 1 % by weight of the emulsifier Uniperol® EL (wetter having emulsifying and dispersant action based on ethoxylated alkylphenols) was added to this solution, and the mixture was diluted with water to the desired concentration. As an alternative, the active compounds are used as commercially available ready-to-use formulation and diluted to the specified active compound concentration with water.
The visually determined percentages of infected leaf areas are converted into efficacies in % of the untreated control:
The efficacy ($R^4$) is calculated as follows using Abbot's formula:

$$R^4 = (1 - \alpha/\beta) \cdot 100$$

α corresponds to the fungal infection of the treated plants in % and
β corresponds to the fungal infection of the untreated (control) plants in %

An efficacy of 0 means that the infection level of the treated plants corresponds to that of the untreated control

plants; an efficacy of 100 means that the treated plants are not infected.

The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies.

$$\text{Colby's formula:} \qquad E = x + y - x \cdot y/100$$

E expected efficacy, expressed in % of the untreated control, when using the composition of the active compounds A and B at the concentrations a and b;

x efficacy, expressed in % of the untreated control, when using the active compound A at the concentration a;

y efficacy, expressed in % of the untreated control, when using the active compound B at the concentration b.

Use example - Activity against early blight of tomato caused by Alternaria solani Leaves of potted tomato plants are sprayed to runoff point with an aqueous suspension having the active compound concentration stated below. The next day, the leaves are infected with an aqueous spore suspension of Alternaria solani in a 2% biomalt solution having a density of 0.17 x $10^6$ spores/ml. The plants are then placed in a water vapor-saturated chamber at temperatures between 20 and 22°C. After 5 days, the disease on the untreated but infected control plants has developed to such an extent that the infection can be determined visually in %.

## Claims

**1.** Fungicidal mixtures comprising

1) at least one triazolopyrimidine of formula I,

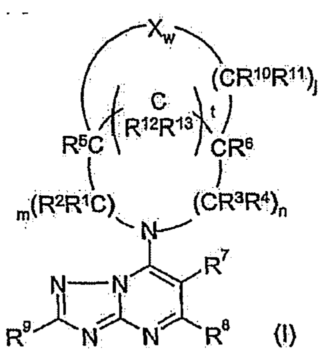

(I)

wherein the variables have the following meanings

$R^1$, $R^2$, $R^3$, $R^4$, $R^{10}$, $R^{11}$, $R^{12}$ and $R^{13}$ each independently of each other are hydrogen, halogen or $C_1$-$C_6$ alkyl; or

$R^{12}$ and $R^{13}$ are part of an endocyclic double bond if t is 2, 3 or 4;

$R^5$, $R^6$ each independently of each other, are hydrogen, halogen, or $C_1$-$C_6$ alkyl;
$R^7$ is phenyl or a heteroaromatic group selected from pyridin, pyrimidine and thiophen which aromatic rings are substituted by 1 to 5 groups each independently of each other selected from halogen, $C_1$-$C_3$-alkyl, $C_1$-$C_3$-halogenalkyl, and $C_1$-$C_3$-alkoxy;
$R^8$ is $C_1$-$C_6$ alkyl or halogen;
$R^9$ is hydrogen, mercapto or $C_1$-$C_3$ alkylthio;
X is oxygen, sulfur or N-$C_1$-$C_3$-alkyl;
(m+n) is 0, 1, 2, or 3;
(w+j) is 1,2,3 or 4; and
t is 0,1, 2, 3 or 4;

and
2) at least one active compound II selected from the following groups:

A) azoles selected from the group consisting of bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole, prochloraz, pefurazoate, imazalil, triflumizole, cyazofamid, benomyl, carbendazim, thiabendazole, fuberidazole, ethaboxam, etridiazole and hymexazole;
B) strobilurins selected from the group consisting of azoxystrobin, dimoxystrobin, enestroburin, fluoxastrobin, kresoxim-methyl, methominostrobin, orysastrobin, picoxystrobin, pyraclostrobin, trifloxystrobin, enestroburin, methyl (2-chloro-5-[1-(3-methylbenzyloxy-imino)ethyl]benzyl)carbamate, methyl (2-chloro-5-[1-(6-methylpyridin-2-ylinethoxyimino)ethyl]benzyl)carbamate and methyl 2-(ortho-(2,5-dimethylphenyloxymethylene)phenyl)-3-methoxyacrylate;
C) carboxamides selected from the group consisting of carboxin, benalaxyl, benodanil, boscalid, fenfuram, fenhexamid, flutolanil, furametpyr, mepronil, metalaxyl, mefenoxam, ofurace, oxadixyl, oxycarboxin, penthiopyrad, thifluzamide, tiadinil, 3,4-dichloro-N-(2-cyanophenyl)isothiazole-5-carboxamide, dimethomorph, flumorph, flumetover, fluopicolide (picobenzamid), zoxamide, carpropamid, diclocymet, mandipropamid, N-(2-(4-[3-(4-chlorophenyl)prop-2-ynyloxy]-3-methoxyphenyl)ethyl)-2-methanesulfonylamino-3-methylbutyramide, N-(2-(4-[3-(4-chlorophenyl)prop-2-ynyloxy]-3-methoxyphenyl)ethyl)-2-ethanesulfonylamino-3-methylbutyramide, methyl 3-(4-chlorophenyl)-3-(2-isopropoxycarbonylamino-3-methylbutyrylamino)propionate, N-(2-{4-[3-(4-Chloro-phenyl)-prop-2-ynyloxy]-3-methoxy-phenyl}-ethyl)-2-methanesulfonylamino-3-methyl-butyramide, N-(2-{4-[3-(4-Chlorophenyl)-prop-2-ynyloxy]-3-methoxy-phenyl}-ethyl)-2-ethanesulfonyl-amino-3-methyl-butyramide, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide, N-(2-cyanophenyl)-3,4-dichloroisothiazole-5-carboxamide and N-(2-bicyclo-propyl-2-ylphenyl)-3-difluoromethyl-1-methyl-1 H-pyrazole-4-carboxamide;
D) heterocyclic compounds selected from the group consisting of fluazinam, pyrifenox, bupirimate, cyprodinil, fenarimol, ferimzone, mepanipyrim, nuarimol, pyrimethanil, triforine, fenpiclonil, fludioxonil, aldimorph, dodemorph, fenpropimorph, tridemorph, fenpropidin, iprodione, procymidone, vinclozolin, famoxadone, fenamidone, octhilinone, probenazole, 5-chloro-7-(4-methylpiperidin-1-yl)-6-(2,4,6-trifluorophenyl)-[1,2,4] triazolo[1,5-a]pyrimidine, anilazine, diclomezine, pyroquilon, proquinazid, tricyclazole, 2-butoxy-6-iodo-3-propyl-chromen-4-one, acibenzolar-S-methyl, captafol, captan, dazomet, folpet, fenoxanil, quinoxyfen and N,N-dimethyl-3-(3-bromo-6-fluoro-2-methylindole-1-sulfonyl)-[1,2,4]triazole-1-sulfonamide,
E) carbamates selected from the group consisting of mancozeb, maneb, metam, metiram, ferbam, propineb, thiram, zineb, ziram, diethofencarb, iprovalicarb, flubenthiavalicarb, propamocarb, 4-fluorophenyl N-(1-(1-(4-cyanophenyl)ethanesulfonyl)but-2-yl)carbamate, methyl 3-(4-chlorophenyl)-3-(2-isopropoxycarbonylamino-3-methylbutyrylamino)propanoate, and N-(2-Chloro-5-[1-(3-methyl-benzyloxyimino)-ethyl]-benzyll-acetamidecarbamate, N-12-Chloro-5-[1-(6-methyl-pyridin-2-ylmethoxyimino)-ethyl]-benzyl}-acetamide,
F) other fungicides selected from the group consisting of guanidine, dodine, iminoctadine, guazatine, antibiotics: kasugamycin, streptomycin, polyoxin, validamycin A, nitrophenyl derivatives: binapacryl, dinocap, dinobuton, sulfur-containing heterocyclyl compounds: dithianon, isoprothiolane, organometallic compounds: fentin salts, organophosphorus compounds: edifenphos, iprobenfos, fosetyl, fosetyl-aluminum, phosphorous acid and its salts, pyrazophos, tolclofos-methyl, organochlorine compounds: chlorothalonil, dichlofluanid, flusulfamide, hexachlorobenzene, phthalide, pencycuron, quintozene, thiophanate-methyl, tolylfluanid, inorganic active compounds: Bordeaux mixture, copper acetate, copper hydroxide, copper oxychloride, basic copper sulfate, sulfur, others: cyflufenamid, cymoxanil, dimethirimol, ethirimol, furalaxyl, metrafenone and spiroxamine;

in a synergistically effective amount.

**2.** Fungicidal mixtures according to claim 1, wherein $R^8$ in formula I is chloro.

**3.** Fungicidal mixtures according to claim 1 or 2, wherein $R^9$ in formula I is hydrogen.

4. Fungicidal mixtures according to any one of claims 1 to 3, wherein $R^7$ in formula I is a phenyl ring which substituents are selected from 2-fluoro-6-chloro, 2,6-difluoro, 2,6-dichloro, 2-fluoro-6-methyl, 2,4,6-trifluoro, 2,6-difluoro-4-methoxy, 2-chloro-4-methoxy, pentafluoro, 2-methyl-4-fluoro, 2-trifluoromethyl, 2-methoxy-6-fluoro, 2-chloro, 2-fluoro, 2,4-difluoro, 2-fluoro-4-chloro, 2-chloro-4-fluoro, 2-chloro-5-fluoro, 2,3-difluoro, 2,5-difluoro, 2,3,4-trifluoro, 2-methyl, 2,4-dimethyl, 2-methyl-4-chloro, 2-methyl-5-fluoro, 2-fluoro-4-methyl, 2,6-dimethyl, 2,4,6-trimethyl, 2,6-difluoro-4-methyl, 2-trifluoromethyl-4-fluoro, 2-trifluoromethyl-5-fluoro, and 2-trifluoromethyl-5-chloro.

5. Fungicidal mixtures according to any one of claims 1 to 4, wherein wherein the substituent in position 7 of the triazolopyrimidine sceleton is selected from 5-methyl-2-aza-bicyclo[2.1.1]hex-2-yl; 7-aza-bicyclo[2.2.1]hept-7-yl; 3-hydroxy-8-aza-bicyclo[3.2.1]oct-8-yl; 3-aza-bicyclo[3.2.1]oct-3-yl; 2-aza-bicyclo[2.2.2]oct-2-yl; 6-methyl-3-aza-bicyclo[3.1.1]hept-3-yl; 3-methyl-6-aza-bicyclo[3.1.0]hex-6-yl; 3-aza-bicyclo[3.1.0]hex-3-yl; 6-methyl-3-aza-bicyclo [3.1.0]hex-3-yl; 5-methyl-2-aza-bicyclo[3.1.0]hex-2-yl; 3-aza-bicyclo[4.1.0]hept-3-yl; 5-methyl-7-oxa-2-azabicyclo [4.1.0]hept-2-yl; which cyclic groups may be unsubstituted or substituted by one or two groups selected from halogen, hydroxy and $C_1$-$C_4$-alkyl.

6. Fungicidal mixtures according to any one of claims 1 to 5, wherein the compound I is selected from 5-chloro-7-(5-methyl-2-aza-bicyclo[2.1.1]hex-2-yl)-6-(2,4,6-trifluoro-phenyl)-[1,2,4]triazolo[1,5-a]pyrimidine; 5-chloro-6-(2-chloro-6-fluorophenyl)-7-(5-methyl-2-aza-bicyclo[2.1.1]hex-2-yl)-[1 ,2,4]triazolo[1 ,5-a]pyrimidine; 7-(7-aza-bicyclo[2.2.1]hept-7-yl)-5-chloro-6-(2,4,6-trifluoro-phenyl)-[1,2,4]triazolo[1,5-alpyrimidine; 7-(7-aza-bicyclo[2.2.1]hept-7-yl)-5-chloro-6-(2-chloro-6-fluorophenyl)-[1,2,4]triazolo[1,5-a]pyrimidine; 8-[5-chloro-6-(2,4,6-trifluoro-phenyl)-[1,2,4]triazolo[1,5-a]pyrimidin-7-yl]-8-aza-bicyclo[3.2.1]octan-3-ol, 8-[5-chloro-6-(2-chloro-6-fluoro-phenyl)-[1,2,4]triazolo [1,5-a]pyrimidin-7-yl]-8-aza-bicyclo[3.2.1]octan-3-ol; 7-(3-aza-bicyclo[3.2.1]oct-3-yl)-5-chloro-6-(2,4,6-trifluorophenyl)-[1,2,4]triazolo[1,5-a]pyrimidine; 7-(3-aza-bicyclo[3.2.1]oct-3-yl)-5-chloro-6-(2-chloro-6-fluoro-phenyl[1,2,4]triazolo[1,5-a]pyrimidine; 2-[5-chloro-6-(2,4,6-trifluoro-phenyl)-[1,2,4]triazolo[1,5-a]pyrimidin-7-yl]-2-aza-bicyclo[2.2.2] octane; 2-[5-chloro-6-(2-chloro-6-fluoro-phenyl)-[1,2,4]triazolo[1,5-a]pyrimidin-7-yl]2-aza-bicyclo[2.2.2]octane; 5-chloro-7-(6-methyl-3-aza-bicyclo[3.1.1]hept-3-yl)-6-(2,4,6-trifluoro-phenyl)-[1,2,4]triazolo[1,5-a]pyrimidine; 5-chloro-6-(2-chloro-6-fluorophenyl)-7-(6-methyl-3-aza-bicyclo[3.1.1]hept-3-yl)-[1,2,4]triazolo[1,5-a]pyrimidine; 5-chloro-7-(3-methyl-6-aza-bicyclo[3.1.0]hex-6-yl)-6-(2,4,6-trifluoro-phenyl)-[1,2,4]triazolo[1,5-a]pyrimidine; 5-chloro-6-(2-chloro-6-fluoro-phenyl)-7-(3-methyl-6-aza-bicyclo[3.1.0]hex-6-yl)-[1,2,4]triazolo[1,5-a]pyrimidine; 7-(3-aza-bicyclo [3.1.0]hex-3-yl)-5-chloro-6-(2,4,6-trifluoro-phenyl)-[1,2,4]triazolo[1,5-a]pyrimidine; 7-(3-aza-bicydo[3.1.0]hex-3-yl)-5-chloro-6-(2-chloro-6-fluoro-phenyl)-[1,2,4]triazolo[1,5-a]pyrimidine; 5-chloro-7-(6-methyl-3-aza-bicyclo[3.1.0] hex-3-yl)-6-(2,4,6-trifluoro-phenyl)-[1,2,4]triazolo[1,5-a]pyrimidine; 5-chloro-6-(2-chloro-6-fluoro-phenyl)-7-(6-methyl-3-aza-bicyclo[3.1.0]hex-3-yl)-[1,2,4]triazolo[1,5-a]pyrimidine; 5-chloro-7-(5-methyl-2-aza-bicyclo[3.1.0]hex-2-yl)-6-(2,4,6-trifluoro-phenyl)-[1,2,4]triazolo[1,5-a]pyrimidine; 5-chloro-6-(2-chloro-6-fluoro-phenyl)-7-(5-methyl-2-aza-bicyclo[3.1.0]hex-2-yl)-[1,2,4]triazolo[1,5-a]pyrimidine; 7-(3-aza-bicyclo[4.1.0]hept-3-yl)-5-chloro-6-(2,4,6-trifluoro-phenyl)-[1,2,4]triazolo[1,5-a]pyrimidine; 7-(3-aza-bicyclo[4.1.0]hept-3-yl)-5-chloro-6-(2-chloro-6-fluoro-phenyl)-[1,2,4]triazolo[1,5- a]pyrimidine; 5-chloro-7-(5-methyl-7-oxa-2-aza-bicyclo[4.1.0]hept-2-yl)-6-(2,4,6-trifluoro-phenyl)-[1,2,4]triazolo[1,5-a]pyrimidine ; and 5-chloro-6-(2-chloro-6-fluoro-phenyl)-7-(5-methyl-7-oxa-2-aza-bicyclo [4.1.0]hept-2-yl)-[1,2,4]triazolo[1,5-a]pyrimidine.

7. Fungicidal mixtures according to any one of claims 1 to 6, wherein the compound II is selected from the group consisting of azoxystrobin, dimoxystrobin, fluoxastrobin, orysastrobin, picoxystrobin, pyraclostrobin, and trifloxystrobin.

8. Fungicidal mixtures according to any one of claims 1 to 6, wherein the compound II is selected from the group consisting of cyproconazole, difenoconazole, epoxiconazole, prochloraz, propiconazole, prothioconazole, and tebuconazole.

9. Fungicidal mixtures according to any one of claims 1 to 6, wherein the compound II is selected from the group consisting of chlorothalonil, fosethyl-aluminium, metrafenone, and spiroxamine.

10. Fungicidal mixtures according to any one of claims 1 to 6, wherein the compound II is selected from the group consisting of N-(3',4'-dichloro-4-fluoro-biphenyl-2-yl)-3-difluoromethyl-1-methyl-1H-pyrazole-4-carboxamide, N-(3', 4'-dichloro-5-fluorobiphenyl-2-yl)-3-difluoromethyl-1-methyl-1H-pyrazole-4-carboxamide, N-(2-bicyclopropyl-2-yl-phenyl)-3-difluoromethyl-1-methyl-1H-pyrazole-4-carboxamide, boscalid, dimethomorph, flopicolide, mandipropamide, and metalaxyl.

11. Fungicidal mixtures according to any one of claims 1 to 6, wherein the compound II is selected from the group

consisting of cyprodinil, fludioxonil, iprovalicarb, and 5-chloro-7-(4-methyl-piperidin-1-yl)-6-(2,4,6-trifluorophenyl) [1,2,4]triazolo[1,5-a]pyrimidine.

**12.** Fungicidal mixtures according to any one of claims 1 to 11, comprising a compound of the formula I and a compound II in a weight ratio of from 100:1 to 1:100.

**13.** A method of controlling or preventing fungal infestation in plants, parts of plants, seeds, or at their locus of growth, which comprises applying in any desired sequence, simultaneously, that is, jointly or separately, or in succession, synergistically effective amounts of a mixture as claimed in any one of claims 1 to 12.

**14.** A method as claimed in claim 13, wherein the mixture is applied in an amount of from 0.1 g/ha to 2000 g/ha.

**15.** A method of protection of seeds comprising contacting the seeds before sowing and/or after pregermination with a mixture as defined in claims 1 to 12 in synergistically effective amounts.

**16.** A method as claimed in claim 15 wherein the mixture is applied in an amount of from 0.1 g to 5 kg per 100 kg of seeds.

**17.** Plant propagation material containing treated with the mixtures as defined in claims 1 to 12.

**18.** The plant propagation material of claim 17, wherein seeds are the propagation material.

**19.** Seed, comprising the mixture as claimed in claims 1 to 12 in an amount of from 0.1 g to 5 kg per 100 kg of seeds.

**20.** Fungicidal composition, comprising a liquid or solid carrier and a mixture according to any of claims 1 to 12.

**21.** A process for preparing a composition as claimed in claim 21 by extending the active compounds of formula I and compounds II with solvents and/or carriers.

European Patent Office

# EUROPEAN SEARCH REPORT

Application Number
EP 08 15 2841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 2006/100038 A (SYNGENTA PARTICIPATIONS AG [CH]; SYNGENTA LTD [GB]; WENDEBORN SEBASTIA) 28 September 2006 (2006-09-28)<br>* page 13, line 15 - page 14, line 24 *<br>* page 1; compound I *<br>* pages 32-35 *<br>----- | 1-21 | INV.<br>A01N43/90<br>A01P3/00 |
| Y | WO 2004/110152 A (BASF AG [DE]; TORMO I BLASCO JORDI [DE]; GROTE THOMAS [DE]; SCHERER MA) 23 December 2004 (2004-12-23)<br>* page 13; claim 1 *<br>----- | 1-21 | |
| Y | WO 2005/032254 A (BASF AG [DE]; TORMO I BLASCO JORDI [DE]; GROTE THOMAS [DE]; SCHERER MA) 14 April 2005 (2005-04-14)<br>* page 14; claim 1 *<br>----- | 1-21 | |
| Y | WO 2005/110080 A (BASF AG [DE]; BLETTNER CARSTEN [DE]; GEWEHR MARKUS [DE]; GRAMMENOS WAS)<br>24 November 2005 (2005-11-24)<br>* page 60; claim 1 *<br>----- | 1-21 | TECHNICAL FIELDS SEARCHED (IPC)<br>A01N |
| Y | WO 2006/015728 A (BASF AG [DE]; BLETTNER CARSTEN [CN]; DIETZ JOCHEN [DE]; GRAMMENOS WASS) 16 February 2006 (2006-02-16)<br>* page 58; claim 1 *<br>----- | 1-21 | |

The present search report has been drawn up for all claims

| Place of search | Date of completion of the search | Examiner |
|---|---|---|
| Munich | 16 June 2008 | Galley, Carl |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 15 2841

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2008

| Patent document cited in search report | Publication date | Patent family member(s) | Publication date |
|---|---|---|---|
| WO 2006100038 A | 28-09-2006 | AR 056285 A1 | 03-10-2007 |
| WO 2004110152 A | 23-12-2004 | AT 348523 T | 15-01-2007 |
| | | AU 2004246782 A1 | 23-12-2004 |
| | | BR PI0411453 A | 18-07-2006 |
| | | CA 2528198 A1 | 23-12-2004 |
| | | EP 1638402 A1 | 29-03-2006 |
| | | JP 2006527710 T | 07-12-2006 |
| | | KR 20060029228 A | 05-04-2006 |
| | | MX PA05012693 A | 22-02-2006 |
| | | US 2006167019 A1 | 27-07-2006 |
| WO 2005032254 A | 14-04-2005 | AU 2004277339 A1 | 14-04-2005 |
| | | BR PI0414727 A | 21-11-2006 |
| | | CA 2539730 A1 | 14-04-2005 |
| | | EP 1670311 A1 | 21-06-2006 |
| | | JP 2007507452 T | 29-03-2007 |
| | | KR 20060097115 A | 13-09-2006 |
| | | MX PA06002926 A | 14-06-2006 |
| | | US 2007004760 A1 | 04-01-2007 |
| | | UY 28543 A1 | 29-04-2005 |
| WO 2005110080 A | 24-11-2005 | BR PI0509783 A | 23-10-2007 |
| | | EP 1746892 A2 | 31-01-2007 |
| | | JP 2007537193 T | 20-12-2007 |
| | | US 2008039319 A1 | 14-02-2008 |
| WO 2006015728 A | 16-02-2006 | AR 050093 A1 | 27-09-2006 |
| | | AU 2005270459 A1 | 16-02-2006 |
| | | BR PI0514067 A | 27-05-2008 |
| | | CA 2573929 A1 | 16-02-2006 |
| | | CN 1993050 A | 04-07-2007 |
| | | EP 1788877 A1 | 30-05-2007 |
| | | KR 20070047819 A | 07-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006100037 A
- WO 2006100038 A
- EP 1201648 A
- EP 226917 A
- WO 9846608 A
- WO 9924413 A
- WO 04049804 A
- WO 03066609 A
- WO 03053145 A
- WO 0314103 A
- EP 1035122 A
- EP 1028125 A
- EP 242236 A
- EP 242246 A
- WO 9200377 A
- EP 257993 A
- US 5013659 A
- EP 142924 A
- EP 193259 A
- WO 9211376 A
- WO 9214827 A
- WO 9119806 A
- WO 9113972 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A


### Non-patent literature cited in the description


- **BROWNING.** Agglomeration. *Chemical Engineering,* 04 December 1967, 147-48
- Perry' s Chemical Engineer' s Handbook. McGraw-Hill, 1963, 8-57
- **KLINGMAN.** Weed Control as a Science. John Wiley and Sons, Inc, 1961
- **HANCE et al.** Weed Control Handbook. Blackwell Scientific Publications, 1989
- **MOLLET, H. ; GRUBEMANN, A.** Formulation technology. Wiley VCH Verlag GmbH, 2001
- **D. A. KNOWLES.** Chemistry and Technology of Agrochemical Formulations. Kluwer Academic Publishers, 1998
- **COLBY, S.R.** Calculating synergistic and antagonistic responses of herbicide combinations. *Weeds,* 1967, vol. 15, 20-22